# EUROPEAN PATENT SPECIFICATION

(11) **EP 4 422 144 B1**
(45) Date of publication and mention of the grant of the patent: **24.09.2025**
(21) Application number: 22882378.7
(22) Date of filing: 27.07.2022
(51) Int. Cl.: H04L 45/02, H04L 45/12, H04L 45/302, H04L 45/00, H04L 45/44

(54) **DETERMINISTIC ROUTING CALCULATION METHOD AND APPARATUS, STORAGE MEDIUM, AND ELECTRONIC DEVICE**
DETERMINISTISCHES ROUTINGBERECHNUNGSVERFAHREN UND VORRICHTUNG, SPEICHERMEDIUM UND ELEKTRONISCHE VORRICHTUNG
PROCÉDÉ ET APPAREIL DE CALCUL DE ROUTAGE DÉTERMINISTE, SUPPORT DE STOCKAGE ET DISPOSITIF ÉLECTRONIQUE

(30) Priority: 22.10.2021 CN 202111236373
(43) Date of publication of application: 28.08.2024
(73) Proprietor: ZTE Corporation, Shenzhen, Guangdong 518057 (CN)
(72) Inventor: XIONG, Quan, Shenzhen, Guangdong 518057 (CN); PENG, Shaofu, Shenzhen, Guangdong 518057 (CN)
(74) Representative: Pennacchio, Salvatore Giovanni
(86) International application number: PCT/CN2022/108364
(87) International publication number: WO 2023/065756

(56) References cited:
- CN-A- 112 187 641
- US-B1- 10 601 724
- US-B2- 7 843 929
- TALAULIKAR P PSENAK CISCO SYSTEMS K: "Flexible Algorithm Definition Advertisement with BGP Link-State; draft-ketant-idr-bgp-ls-flex-algo-00.txt", FLEXIBLE ALGORITHM DEFINITION ADVERTISEMENT WITH BGP LINK-STATE; DRAFT-KETANT-IDR-BGP-LS-FLEX-ALGO-00.TXT; INTERNET-DRAFT: INTER-DOMAIN ROUTING, INTERNET ENGINEERING TASK FORCE, IETF; STANDARDWORKINGDRAFT, INTERNET SOCIETY (ISOC) 4, RUE DES FALAISES, 2 July 2018 (2018-07-02), pages 1 - 10, XP015127504
- BRITTO S HEGDE P KANERIYA R SHETTY R BONICA JUNIPER NETWORKS W: "IGP Flexible Algorithms (Flexalgo) In IP Networks; draft-bonica-lsr-ip-flexalgo-00.txt", 29 September 2020 (2020-09-29), pages 1 - 14, XP015141876, Retrieved from the Internet <URL:https://tools.ietf.org/html/draft-bonica-lsr-ip-flexalgo-00> [retrieved on 20200929]
- SHAOFU. PENG ZTE CORPORATION TONY. LI JUNIPER NETWORKS: "IGP Flexible Algorithm with Deterministic Routing draft-peng-lsr-flex-algo-deterministic-routing-02; draft-peng-lsr-flex-algo-deterministic-routing-02.txt", IGP FLEXIBLE ALGORITHM WITH DETERMINISTIC ROUTING DRAFT-PENG-LSR-FLEX-ALGO-DETERMINISTIC-ROUTING-02; DRAFT-PENG-LSR-FLEX-ALGO-DETERMINISTIC-ROUTING-02.TXT; INTERNET-DRAFT: NETWORK WORKING GROUP, INTERNET ENGINEERING TASK FORCE, IETF; STANDARDWORKINGD, no. 02, 27 February 2022 (2022-02-27), Internet Society (ISOC) 4, rue des Falaises CH- 1205 Geneva, Switzerland, pages 1 - 27, XP015150392

## Description

### Technical Field

The present disclosure relates to the field of communications, and in particular to a deterministic routing calculation method and apparatus, a storage medium and an electronic device.

### Background

At present, a conventional IGP (Interior Gateway Protocol) calculates a shortest path via an IGP Metric (e.g., a COST value in an OSPF), so as to perform routing on a data packet. However, when all messages select the shortest path, many problems are obviously caused, and the path cannot meet the requirements of a user, such that a TE mechanism emerges as the times require, for example, RSVP-TE/SR-TE and other technologies, and the TE mechanism calculates a path according to other Metrics or Constraints, and forwards the traffic, so that the messages select other paths other than the shortest path. The function of the TE is actually to add other constraints on the basis of IGP path calculation, so as to perform path calculation. draft-ietf-lsr-flex-algo-17 proposes flexible algorithms (Flex-algo), and proposes a policy, which may enable the IGP itself to calculate the shortest path with constraints, thereby achieving effects that may only be achieved by the TE originally. A path under a certain constraint condition is created in the IGP, flooding is performed in the IGP, a forwarding table of a node is configured, and a calculation type, a Metric type and the constraint conditions of a group of path computation are extended. draft-ietf-lsr-flex-algo-bw-con-01 further extends constraint conditions for excluding the lowest bandwidth and excluding the maximum link delay according to the bandwidth and low delay requirements in the network. Flexible Algorithm Definition (FAD) is a TLV extended for the Flex-algo, is used for annunciating a specific calculation rule of a certain Flex-algo, and is generally represented by a triple (Metric Type, Calc-Type, topo-constraints, which respectively represent link index constraints, such as a delay index or the like, calculation algorithm constraints, for example, an SPF algorithm is used, and topology constraints, for example, whether some links are included/removed during calculation). Different Flex-algo may be regarded as different logical topologies under the same physical topology, and these logical topologies have different link weights on the basis of the physical topology, carry different metric types, have different link affinity attributes, and exclude/include some links, so as to reserve different resources and implement a TE path. Document "Flexible Algorithm Definition Advertisement with BGP Link-State" (draft-kenant-idr-bgp-ls-flex-algo-00; date 01.July.2018) discloses Flex-algo protocol for routing.

In order to meet the service requirements of a deterministic service and the like, and in order to implement a deterministic technology on an L3 layer, the IETF Standards Organization proposes deterministic networking (DetNet), wherein RFC8655 defines a related technical architecture of the DetNet, and provides a deterministic service for a two-layer bridge and a three-layer routing network, and quality of service (QoS) requirements include a deterministic delay upper limit, a low packet loss rate, a reduced variation, high reliability, and the like. A deterministic network employs resource reservation, explicit routing and service protection to provide the QoS. The resource reservation is to meet deterministic resource requirements, and relates to resource allocation and reservation, including a link bandwidth, delay queuing resources, and the like. The explicit routing is to meet a deterministic path requirement, which means that a network path of a deterministic service flow needs to be selected in advance, so as to ensure the stability of the routing at least during service camping. The routing of the deterministic network employs a deterministic path technology in which the routing path does not change along with a real-time change in the network topology. This technology ensures that the transmission path of a deterministic flow is relatively fixed, provides the most basic guarantee for the resource reservation technology, and meanwhile the fixation of the path also provides a possibility for the accurate calculation of the delay, which is an important technical support for ensuring a limited delay and variation.

The current Flex-algo do not consider the deterministic networking technology, for example, on the basis of constraint conditions, such as an end-to-end deterministic delay upper limit, a packet loss rate, a delay variation, queuing resources and the like, the DetNet cannot provide deterministic resources and paths for the deterministic network, and cannot meet deterministic service requirements such as a low delay variation, a low packet loss rate, etc.

Therefore, in view of the problem in the related arts that deterministic delay calculation and reporting cannot be implemented on the basis of an Flex-algo and by using an IGP/BGP-LS protocol in the Standards, no effective solution has been proposed yet.

Therefore, it is necessary to improve the related arts, so as to overcome the defects in the related arts.

### Summary

Embodiments of the present disclosure provide a deterministic routing calculation method and apparatus, a storage medium and an electronic device, so as to at least solve the problem in the related arts that deterministic delay calculation and reporting cannot be implemented on the basis of an Flex-algo and by using an IGP/BGP-LS protocol in the Standards.

According to an aspect of the embodiments of the present disclosure, provided is a deterministic routing calculation method, including: receiving an Flex-algo policy configuration message sent by a management unit or a control unit, wherein the Flex-algo policy configuration message includes information of a deterministic routing calculation-related policy; and sending, in a network domain, a flooding message to all devices in the network domain, so as to instruct all devices to calculate a path according to the deterministic routing calculation-related policy and to generate a deterministic routing, wherein the flooding message carries the Flex-algo policy configuration message.

According to another aspect of the embodiments of the present disclosure, provided is a deterministic routing calculation apparatus, applied to a device-side node, and including: a receiving module, configured to receive an Flex-algo policy configuration message sent by a management unit or a control unit, wherein the Flex-algo policy configuration message includes information of a deterministic routing calculation-related policy; and a sending module, configured to send, in a network domain, a flooding message to all devices in the network domain, so as to instruct all devices to calculate a path according to the deterministic routing calculation-related policy and to generate a deterministic routing, wherein the flooding message carries the Flex-algo policy configuration message.

According to yet another aspect of the embodiments of the present disclosure, further provided isa computer-readable storage medium, in which a computer program is stored, wherein the computer program is configured to execute, when running, the method according to any one of the above items.

According to yet another aspect of the embodiments of the present disclosure, further provided is an electronic device, including a memory, a processor, and a computer program, which is stored in the memory and is executable on the processor, wherein the processor executes the method according to any one of the above items by means of the computer program.

In the present disclosure, the Flex-algo policy configuration message sent by the management unit or the control unit is received, wherein the Flex-algo policy configuration message includes the information of the deterministic routing calculation-related policy; and the flooding message is sent, in the network domain, to all devices in the network domain, so as to instruct all devices to calculate the path according to the deterministic routing calculation-related policy and to generate the deterministic routing, wherein the flooding message carries the Flex-algo policy configuration message. Therefore, the problem in the related arts that deterministic delay calculation and reporting cannot be implemented on the basis of the Flex-algo and by using an IGP/BGP-LS protocol in the Standards is solved, deterministic resources and paths are provided for a deterministic network, and deterministic service requirements of a low delay variation and a low packet loss rate are met.

### Brief Description of the Drawings

The drawings described herein are used to provide a further understanding of the present disclosure and constitute a part of the present disclosure, and exemplary embodiments and descriptions of the present disclosure are used to explain the present disclosure, and do not constitute improper limitations on the present disclosure. In the drawings:
Fig. 1 is a block diagram of a hardware structure of a computer terminal of a deterministic routing calculation method according to an embodiment of the present disclosure;
Fig. 2 is a flowchart of a deterministic routing calculation method according to an embodiment of the present disclosure;
Fig. 3 is a first schematic diagram of a sub-TLV of an IS-IS FAD sub-TLV according to an embodiment of the present disclosure;
Fig. 4 is a second schematic diagram of the sub-TLV of the IS-IS FAD sub-TLV according to an embodiment of the present disclosure;
Fig. 5 is a third schematic diagram of the sub-TLV of the IS-IS FAD sub-TLV according to an embodiment of the present disclosure;
Fig. 6 is a fourth schematic diagram of the sub-TLV of the IS-IS FAD sub-TLV according to an embodiment of the present disclosure;
Fig. 7 is a fifth schematic diagram of the sub-TLV of the IS-IS FAD sub-TLV according to an embodiment of the present disclosure;
Fig. 8 is a sixth schematic diagram of the sub-TLV of the IS-IS FAD sub-TLV according to an embodiment of the present disclosure;
Fig. 9 is a first schematic diagram of a sub-TLV of an OSPF FAD TLV according to an embodiment of the present disclosure;
Fig. 10 is a second schematic diagram of the sub-TLV of the OSPF FAD TLV according to an embodiment of the present disclosure;
Fig. 11 is a third schematic diagram of the sub-TLV of the OSPF FAD TLV according to an embodiment of the present disclosure;
Fig. 12 is a fourth schematic diagram of the sub-TLV of the OSPF FAD TLV according to an embodiment of the present disclosure;
Fig. 13 is a fifth schematic diagram of the sub-TLV of the OSPF FAD TLV according to an embodiment of the present disclosure;
Fig. 14 is a sixth schematic diagram of the sub-TLV of the OSPF FAD TLV according to an embodiment of the present disclosure;
Fig. 15 is a schematic diagram of a Flex-algo deterministic routing calculation processing flow according to an embodiment of the present disclosure;
Fig. 16 is a schematic diagram of a deterministic network based on IGP path calculation according to an embodiment of the present disclosure; and
Fig. 17 is a structural block diagram of a deterministic routing calculation apparatus according to an embodiment of the present disclosure.

### Detailed Description of the Embodiments

In order to make those skilled in the art better understand the solutions of the present disclosure, a clear and complete description of technical solutions in the embodiments of the present disclosure will be given below, in combination with the drawings in the embodiments of the present disclosure. Apparently, the embodiments described below are merely a part, but not all, of the embodiments of the present disclosure. All of other embodiments, obtained by those ordinary skilled in the art based on the embodiments in the present disclosure without any creative effort, fall into the protection scope of the present disclosure.

It should be noted that, the terms "first" and "second" and the like in the specification, claims and the above drawings of the present disclosure are used for distinguishing similar objects, and are not necessarily used for describing a specific sequence or precedence order. It should be understood that the data used in this way may be interchanged under appropriate circumstances, so that the embodiments of the present disclosure described herein may be implemented in a sequence other than those illustrated or described herein. In addition, the terms "including" and "having", and any variations thereof are intended to cover non-exclusive inclusions, for example, processes, methods, systems, products or devices including a series of steps or units are not necessarily limited to those clearly listed steps or units, but may include other steps or units that are not clearly listed or are inherent to these processes, methods, products or devices.

Next, the technical terms in the present disclosure are explained below:
Flex-algo (Flexible Algorithm), which is a flexible algorithm, in which a user may autonomously create a separate topology in an IGP and calculate a path, and which provides a suggested solution for a separated routing plane, a constrained TE path and a low-delay routing.

BGP (Border Gateway Protocol), which is a routing protocol of an autonomous system running on TCP.

IGP (Interior Gateway Protocol), which is a protocol dedicated to data interaction and channel information circulation between gateways in an autonomous network system.

DetNet (Deterministic Networking), which is a technology that helps an IP network to change from "best effort" to "on-time, accurate, fast", and controls and shortens an end-to-end delay.

TE (Traffic Engineer), which represents a technology for managing and controlling network traffic.

RSVP ( Resource Reservation Protocol), which is a signaling protocol located in a third layer of a network protocol and is independent of various network media, so that an application can notify a network of its own QoS requirements via signaling, and the network can reserve corresponding resources for the application.

OSPF (Open Shortest Path First) protocol, which is opposite to an RIP (Range Vector Routing Protocol), and may be used for deciding a routing in a single autonomous system (AS).

Flooding, which does not require the maintenance of the topological structure of the network or related routing calculation, and only requires a node receiving information to forward a data packet in a broadcast manner.

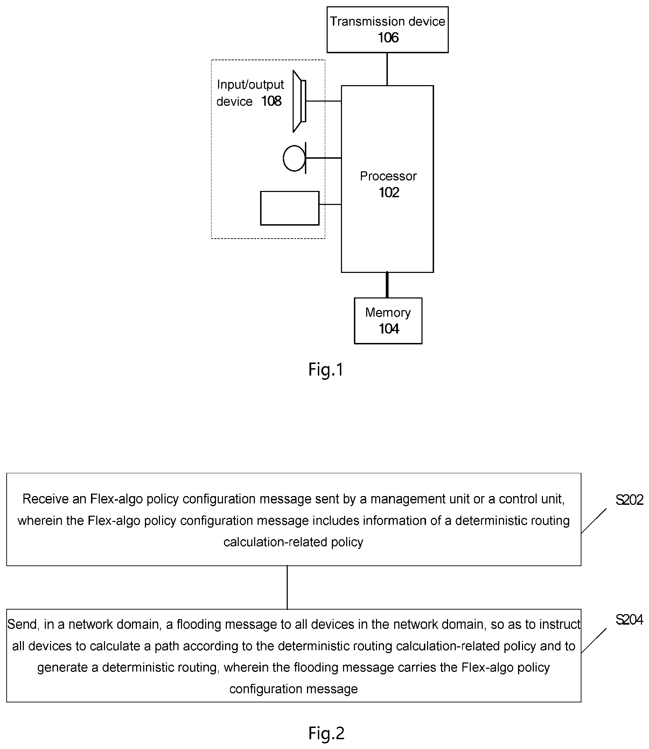

A method embodiment provided in the embodiments of the present disclosure may be executed in a computer terminal, or a similar computing apparatus. Taking running on the computer terminal as an example, Fig. 1 is a block diagram of a hardware structure of a computer terminal of a deterministic routing calculation method according to an embodiment of the present disclosure. As shown in Fig. 1, the computer terminal may include one or more (only one is shown in Fig. 1) processors 102 (the processor 102 may include, but is not limited to, a microprocessor unit (MCU for short) or a programmable logic device (PLD for short)), and a memory 104, configured to store data. In an exemplary embodiment, the computer terminal may further include a transmission module 106, configured to implement a communication function, and an input/output device 108. Those of ordinary skilled in the art can understand that, the structure shown in Fig. 1 is merely an example, and does not limit the structure of the computer terminal. For example, the computer terminal 10 may further include more or fewer components than those shown in Fig. 1, or have the same functions as those shown in Fig. 1 or have different configurations with more functions than those shown in Fig. 1.

The memory 104 may be configured to store computer programs, such as software programs and modules of application software, for example, a computer program corresponding to the deterministic routing calculation method in the embodiments of the present disclosure, the processor 102 executes various functional applications and data processing, that is, implements the above method, by means of running the computer programs stored in the memory 104. The memory 104 may include a high-speed random access memory, and may further include a non-volatile memory, such as one or more magnetic storage apparatuses, flash memories, or other non-volatile solid-state memories. In some instances, the memory 104 may further include memories that are disposed remotely relative to the processor 102, and these remote memories may be connected to the computer terminal via a network. Instances of the above network include, but are not limited to, the Internet, an intranet, a local area network, a mobile communication network, and combinations thereof.

The transmission device 106 is configured to receive or send data via a network. Specific examples of the above network may include a wireless network provided by a communication provider of the computer terminal. In one instance, the transmission device 106includes a network interface controller (NIC), which may be connected with other network devices through a base station, so as to communicate with the Internet. In one instance, the transmission device 106 may be a radio frequency (RF) module, which is configured to communicate with the Internet in a wireless manner.

Fig. 2 is a flowchart of a deterministic routing calculation method according to an embodiment of the present disclosure, and as shown in Fig. 2, the method includes the steps of:
Step S202, receiving an Flex-algo policy configuration message sent by a management unit or a control unit, wherein the Flex-algo policy configuration message includes information of a deterministic routing calculation-related policy; and
step S204, sending, in a network domain, a flooding message to all devices in the network domain, so as to instruct all devices to calculate a path according to the deterministic routing calculation-related policy and to generate a deterministic routing, wherein the flooding message carries the Flex-algo policy configuration message.

In the above steps, the Flex-algo policy configuration message sent by the management unit or the control unit is received, wherein the Flex-algo policy configuration message includes the information of the deterministic routing calculation-related policy; and the flooding message is sent, in the network domain, to all devices in the network domain, so as to instruct all devices to calculate the path according to the deterministic routing calculation-related policy and to generate the deterministic routing, wherein the flooding message carries the Flex-algo policy configuration message. Therefore, the problem in the related arts that deterministic delay calculation and reporting cannot be implemented on the basis of the Flex-algo and by using an IGP/BGP-LS protocol in the Standards is solved, deterministic resources and paths are provided for a deterministic network, and deterministic service requirements of a low delay variation and a low packet loss rate are met.

Further, a technical solution is proposed, and the specific steps include: in the case that the protocol used for sending the flooding message in the network domain is an open shortest path first (OSPF) protocol, the information of the deterministic routing calculation-related policy includes: a Metric-Type added in an OSPF FAD TLV, and a Deterministic Metric added in the OSPF FAD TLV; and in the case that the protocol used for sending the flooding message in the network domain is an intermediate system to intermediate system (IS-IS) protocol, the information of the deterministic routing calculation-related policy includes: a Metric-Type added in an IS-IS FAD sub-TLV, and a Deterministic Metric added in the IS-IS FAD sub-TLV.

Further, the method further includes: in the case that the protocol used for sending the flooding message in the network domain is the open shortest path first (OSPF) protocol, the information of the deterministic routing calculation-related policy includes: a topology constraint condition added in a sub-TLV of an OSPF FAD sub-TLV for calculating a deterministic path; and in the case that the protocol used for sending the flooding message in the network domain is the intermediate system to intermediate system (IS-IS) protocol, the information of the deterministic routing calculation-related policy includes: a topology constraint condition added in a sub-TLV of the IS-IS FAD sub-TLV for calculating a deterministic path.

Further, the method further includes: the information of the deterministic routing calculation-related policy includes an Exclude Maximum Processing Delay sub-TLV added in the sub-TLV of the IS-IS FAD sub-TLV, wherein the Exclude Maximum Processing Delay sub-TLV is used for excluding the maximum node processing delay and variation; the information of the deterministic routing calculation-related policy includes an Exclude Maximum Queuing Delay sub-TLV added in the sub-TLV of the IS-IS FAD sub-TLV, wherein the Exclude Maximum Queuing Delay sub-TLV is used for excluding the maximum queuing delay and variation; the information of the deterministic routing calculation-related policy includes an Exclude Maximum POF Delay sub-TLV added in the sub-TLV of the IS-IS FAD sub-TLV, wherein the Exclude Maximum POF Delay sub-TLV is used for excluding the maximum packet ordering function delay and variation; the information of the deterministic routing calculation-related policy includes an Exclude Maximum Link Loss sub-TLV added in the sub-TLV of the IS-IS FAD sub-TLV, wherein the Exclude Maximum Link Loss sub-TLV is used for excluding the maximum link loss; the information of the deterministic routing calculation-related policy includes an Exclude Maximum DetNet reservable bandwidth sub-TLV added in the sub-TLV of the IS-IS FAD sub-TLV, wherein the Exclude Maximum DetNet reservable bandwidth sub-TLV is used for excluding the maximum DetNet reservable bandwidth; the information of the deterministic routing calculation-related policy includes an Include-Any Queuing Algorithm sub-TLV added in the sub-TLV of the IS-IS FAD sub-TLV, wherein the Include-Any Queuing Algorithm sub-TLV is used for indicating a deterministic network queuing scheduling algorithm; the information of the deterministic routing calculation-related policy includes an Include-All Queuing Algorithm sub-TLV added in the sub-TLV of the IS-IS FAD sub-TLV, wherein the Include-All Queuing Algorithm sub-TLV is used for indicating all deterministic network queuing scheduling algorithms; and the information of the deterministic routing calculation-related policy includes an Exclude Queuing Algorithm sub-TLV added in the sub-TLV of the IS-IS FAD sub-TLV, wherein the Exclude Queuing Algorithm sub-TLV is used for excluding a target deterministic network queuing scheduling algorithm.

Further, the method further includes: the information of the deterministic routing calculation-related policy includes an Exclude Maximum Processing Delay sub-TLV added in the sub-TLV of the OSPF FAD sub-TLV, wherein the Exclude Maximum Processing Delay sub-TLV is used for excluding the maximum node processing delay and variation; the information of the deterministic routing calculation-related policy includes an Exclude Maximum Queuing Delay sub-TLV added in the sub-TLV of the OSPF FAD sub-TLV, wherein the Exclude Maximum Queuing Delay sub-TLV is used for excluding the maximum queuing delay and variation; the information of the deterministic routing calculation-related policy includes an Exclude Maximum POF Delay sub-TLV added in the sub-TLV of the OSPF FAD sub-TLV, wherein the Exclude Maximum POF Delay sub-TLV is used for excluding the maximum packet ordering function delay and variation; the information of the deterministic routing calculation-related policy includes an Exclude Maximum Out-of-order Number sub-TLV added in the sub-TLV of the OSPF FAD sub-TLV, wherein the Exclude Maximum Out-of-order Number sub-TLV is used for excluding the maximum out-of-order number; the information of the deterministic routing calculation-related policy includes an Exclude Maximum DetNet reservable bandwidth sub-TLV added in the sub-TLV of the OSPF FAD sub-TLV, wherein the Exclude Maximum DetNet reservable bandwidth sub-TLV is used for excluding the maximum DetNet reservable bandwidth; the information of the deterministic routing calculation-related policy includes an Include-Any Queuing Algorithm sub-TLV added in the sub-TLV of the OSPF FAD sub-TLV, wherein the Include-Any Queuing Algorithm sub-TLV is used for indicating a deterministic network queuing scheduling algorithm; the information of the deterministic routing calculation-related policy includes an Include-All Queuing Algorithm sub-TLV added in the sub-TLV of the OSPF FAD sub-TLV, wherein the Include-All Queuing Algorithm sub-TLV is used for indicating all deterministic network queuing scheduling algorithms; and the information of the deterministic routing calculation-related policy includes an Exclude Queuing Algorithm sub-TLV added in the sub-TLV of the OSPF FAD sub-TLV, wherein the Exclude Queuing Algorithm sub-TLV is used for excluding a target deterministic network queuing scheduling algorithm.

Further, a technical solution is proposed, and the specific steps include: instructing any device in the network domain to report, to a controller, a deterministic routing that carries the information of the deterministic routing calculation-related policy.

Further, a technical solution is proposed, and the specific steps include: implementing a deterministic delay variation index constraint by means of an extended BGP-LS protocol, and determining a topology constraint condition.

Further, the method further includes: adding an Exclude Maximum Processing Delay sub-TLV into the BGP-LS protocol, so as to exclude the maximum node processing delay and variation; adding an Exclude Maximum Queuing Delay sub-TLV into the BGP-LS protocol, so as to exclude the maximum queuing delay and variation; adding an Exclude Maximum POF Delay sub-TLV into the BGP-LS protocol, so as exclude the maximum packet ordering function delay and variation; adding an Exclude Maximum Link Loss sub-TLV into the BGP-LS protocol, so as to exclude the maximum link loss; adding an Exclude Maximum DetNet reservable bandwidth sub-TLV into the BGP-LS protocol, so as exclude the maximum DetNet reservable bandwidth; adding an Include-Any Queuing Algorithm sub-TLV into the BGP-LS protocol, so as to indicate a deterministic network queuing scheduling algorithm; adding an Include-All Queuing Algorithm sub-TLV into the BGP-LS protocol, so as to indicate all deterministic network queuing scheduling algorithms; and adding an Exclude Queuing Algorithm sub-TLV into the BGP-LS protocol, so as to exclude a target deterministic network queuing scheduling algorithm.

In order to meet the requirements of path determination and resource reservation of a deterministic network, the present disclosure provides a method for implementing Flex-algo-based deterministic path calculation and reporting by using an extended IGP/BGP-LS protocol. Specifically, in the extended IGP and the BGP-LS protocol, on the basis of a deterministic delay variation index constraint and a topology constraint condition of the Flex-algo, deterministic routing calculation is implemented, and intra-domain flooding and reporting are completed.

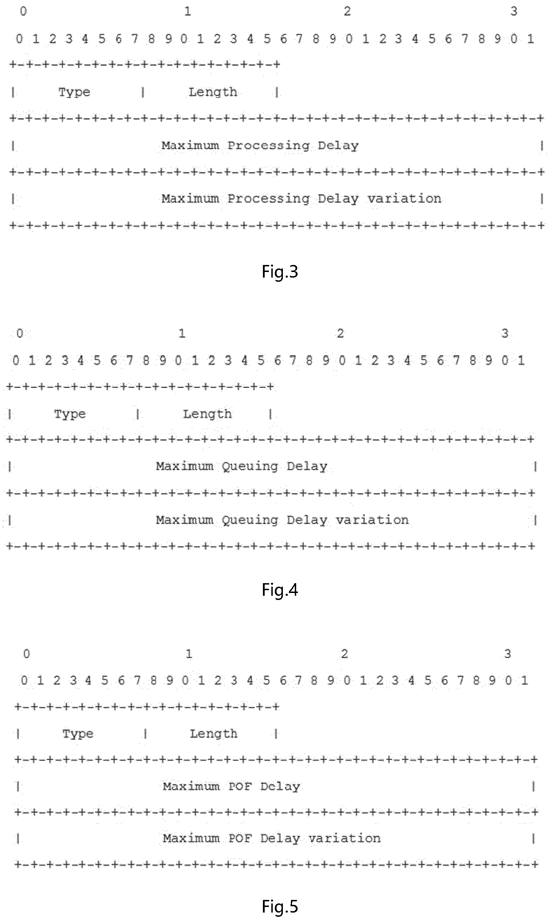

Next, the deterministic routing calculation method is described in combination with the following embodiments and Figs. 3-14.

### Embodiment 1

In the present embodiment, the IGP may be extended to implement an Flex-algo-based deterministic delay variation index constraint and an Flex-algo-based topology constraint condition.

Optionally, in one embodiment, a new Deterministic Delay Metric is added, wherein by means of extending an OSPF FAD TLV, a Metric-Type may be newly added(0: IGP Metric, 1: Min Unidirectional Link Delay, 2: TE Metric), and a Deterministic Metric may be newly added; or, by means of extending an IS-IS FAD Sub-TLV, a Metric-Type may be newly added(0: IGP Metric, 1: Min Unidirectional Link Delay, 2: TE Metric), and a Deterministic Metric may be newly added.

It should be noted that, when the Flex-algo is based on SPF path calculation of the Determine Metric, the calculated optimal path has the minimum cumulative Deterministic Delay/Jitter and Loss. It is necessary for the Deterministic Delay/Jitter to consider a forwarding delay in a node and a transmission delay/jitter on a link. The forwarding delay in the node generally includes a processing delay for a message and a queuing delay waiting for scheduling in a queue. When duplication elimination ordering is implemented in a deterministic network, it is also necessary to consider an ordering delay. It is necessary for the Deterministic Loss to consider packet loss in the node and packet loss of the link.

Optionally, in one embodiment, a constraint condition for calculating a deterministic path in the deterministic network is newly added, for example, exclude the maximum node processing delay, exclude the maximum queuing delay, exclude the maximum packet ordering function delay, exclude the maximum link loss, exclude the maximum DetNet reservable bandwidth, exclude a queuing scheduling algorithm, Include-any queuing scheduling algorithm, Include-any duplication elimination ordering capability, and the like.

Fig. 3 is a first schematic diagram of a sub-TLV of an IS-IS FAD sub-TLV according to an embodiment of the present disclosure, which provides a schematic diagram of an IS-IS Exclude Maximum Processing Delay sub-TLV. As shown in Fig. 3, the IS-IS Exclude Maximum Processing Delay sub-TLV belonging to the sub-TLV of the IS-IS FAD sub-TLV is extended to exclude the maximum node processing delay and variation.

It should be noted that Type in Fig. 3 is 8 bits, and is used for indicating the type of excluding the maximum processing delay of a node. Length is 8 bits, and is used for indicating the length of the sub-TLV. The Maximum Processing Delay is 32 bits, and is used for indicating the maximum processing delay of the node. The Maximum Processing Delay Variation is 32 bits, and is used for indicating the maximum processing delay variation of the node.

Fig. 4 is a second schematic diagram of the sub-TLV of the IS-IS FAD sub-TLV according to an embodiment of the present disclosure, which provides a schematic diagram of an IS-IS Exclude Maximum Queuing Delay sub-TLV. As shown in Fig. 4, the IS-IS Exclude Maximum Queuing Delay sub-TLV belonging to the sub-TLV of the IS-IS FAD sub-TLV is extended to exclude the maximum node processing delay and variation.

It should be noted that, Type in Fig. 4 is 8 bits, and is used for indicating the type of excluding the maximum queuing delay of the node. Length is 8 bits, and is used for indicating the length of the sub-TLV. The Maximum Queuing Delay is 32 bits, and is used for indicating the maximum queuing processing delay of the node. The Maximum Queuing Delay Variation is 32 bits, and is used for indicating the maximum queuing delay variation of the node.

Fig. 5 is a third schematic diagram of the sub-TLV of the IS-IS FAD sub-TLV according to an embodiment of the present disclosure, which provides a schematic diagram of an IS-IS Exclude Maximum POF Delay sub-TLV. As shown in Fig. 5, the IS-IS Exclude Maximum POF Delay sub-TLV belonging to the IS-IS FAD sub-TLV is extended to exclude the maximum packet ordering function (POF) delay and variation.

It should be noted that, Type in Fig. 5 is 8 bits, and is used for indicating the type of excluding the maximum packet ordering function delay. Length is 8 bits, and is used for indicating the length of the sub-TLV. The Maximum POF Delay is 32 bits, and is used for indicating the maximum POF delay. The Maximum POF Delay Variation is 32 bits, and is used for indicating the maximum POF delay variation.

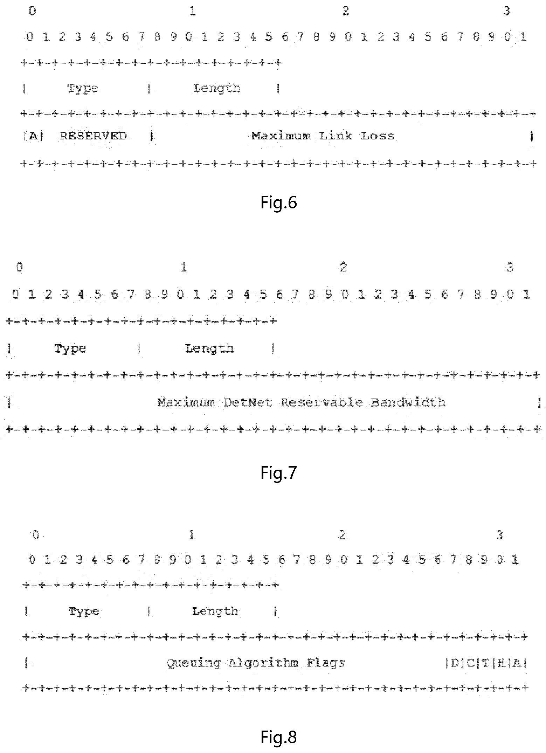

Fig. 6 is a fourth schematic diagram of the sub-TLV of the IS-IS FAD sub-TLV according to an embodiment of the present disclosure, which provides a schematic diagram of an IS-IS Exclude Maximum Link Loss sub-TLV. As shown in Fig. 6, the IS-IS Exclude Maximum Link Loss sub-TLV belonging to the IS-IS FAD sub-TLV is extended to exclude the maximum link loss.

It should be noted that, Type in Fig. 6 is 8 bits, and is used for indicating the type of excluding the maximum link loss. Length is 8 bits, and is used for indicating the length of the sub-TLV. A is 1 bit, and when being set to be 1, A indicates that a change in the link packet loss number exceeds a threshold value. The Maximum Link Loss is 32 bits, and is used for indicating the maximum link loss.

Fig. 7 is a fifth schematic diagram of the sub-TLV of the IS-IS FAD sub-TLV according to an embodiment of the present disclosure, which provides a schematic diagram of an IS-IS Exclude Maximum DetNet reservable bandwidth sub-TLV. As shown in Fig. 7, the IS-IS Exclude Maximum DetNet reservable bandwidth sub-TLV belonging to the IS-IS FAD sub-TLV is extended to exclude the maximum DetNet reservable bandwidth.

It should be noted that, Type in Fig. 7 is 8 bits, and is used for indicating the type of excluding the maximum DetNet reservable bandwidth. Length is 8 bits, and is used for indicating the length of the sub-TLV. The Maximum DetNet reservable bandwidth is 32 bits, and is used for indicating the maximum DetNet reservable bandwidth.

Fig. 8 is a sixth schematic diagram of the sub-TLV under the IS-IS FAD sub-TLV according to an embodiment of the present disclosure, as shown in Fig. 8, a schematic diagram of an IS-IS Include-Any Queuing Algorithm sub-TLV is provided. As shown in Fig. 8, the IS-IS Include-Any Queuing Algorithm sub-TLV belonging to the IS-IS FAD sub-TLV is extended to include a deterministic network queuing scheduling algorithm.

It should be noted that, Type in Fig. 8 is 8 bits, and is used for indicating the type of including any queuing algorithm. The Queuing Algorithm Flags is 32 bits, and is used for indicating queuing algorithms, wherein D represents a Dealine scheduling algorithm, C represents a CBS scheduling algorithm, T represents a TAS scheduling algorithm, Q represents a CQF scheduling algorithm, and A represents an ATS scheduling algorithm.

It should be noted that, the type of the sub-TLV of the IS-IS FAD sub-TLV may be modified by means of modifying the type indicated by Type in Fig. 8, wherein the type indicated by Type may be a type instructing to include all maximum queuing algorithms, and may also be a type instructing to exclude the queuing algorithms, but it is not limited thereto.

In one embodiment, the type of an IS-IS Include-All Queuing Algorithm sub-TLV is provided, as shown in Fig. 8, in the present embodiment, the IS-IS Include-All Queuing Algorithm sub-TLV belonging to the IS-IS FAD sub-TLV is extended to determine all deterministic network queuing scheduling algorithms. Type is 8 bits, and is used for indicating the type of including all maximum queuing algorithms. Length is 8 bits, and is used for indicating the length of the sub-TLV. The Queuing Algorithm Flags is 32 bits, and is used for indicating the queuing algorithms, wherein D represents a Dealine scheduling algorithm, C represents a CBS scheduling algorithm, T represents a TAS scheduling algorithm, Q represents a CQF scheduling algorithm, and A represents an ATS scheduling algorithm.

In one embodiment, the type of an IS-IS Exclude Queuing Algorithm sub-TLV is provided, as shown in Fig. 8, in the present embodiment, the IS-IS Exclude Queuing Algorithm sub-TLV belonging to the IS-IS FAD sub-TLV is extended to exclude some deterministic network queuing scheduling algorithms. Type is 8 bits, and is used for indicating the type of excluding the queuing algorithms. Length is 8 bits, and is used for indicating the length of the sub-TLV. The Queuing Algorithm Flags is 32 bits, and is used to indicate the queuing algorithms, wherein D represents a Dealine scheduling algorithm, C represents a CBS scheduling algorithm, T represents a TAS scheduling algorithm, Q represents a CQF scheduling algorithm, and A represents an ATS scheduling algorithm.

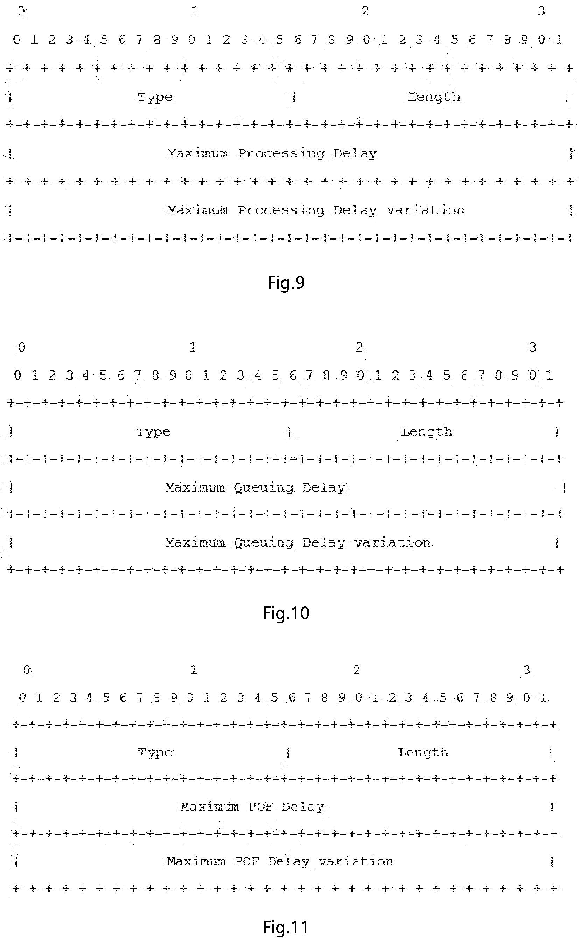

Fig. 9 is a first schematic diagram of a sub-TLV of an OSPF FAD TLV according to an embodiment of the present disclosure, which provides a schematic diagram of an OSPF Exclude Maximum Processing Delay sub-TLV. As shown in Fig. 9, the OSPF Exclude Maximum Processing Delay sub-TLV belonging to the sub-TLV of the OSPF FAD TLV is extended to exclude the maximum node processing delay and variation.

It should be noted that, Type in Fig. 9 is 16 bits, and is used for indicating the type of excluding the maximum processing delay variation of the node. Length is 16 bits, and is used for indicating the length of the sub-TLV. The Maximum Processing Delay is 32 bits, and is used for indicating the maximum processing delay of the node. The Maximum Processing Delay Variation is 32 bits, and is used for indicating the maximum processing delay variation of the node.

Fig. 10 is a second schematic diagram of the sub-TLV of the OSPF FAD TLV according to an embodiment of the present disclosure, which provides a schematic diagram of an OSPF Exclude Maximum Queuing Delay sub-TLV. As shown in Fig. 10, the OSPF Exclude Maximum Queuing Delay sub-TLV belonging to the sub-TLV of the OSPF FAD TLV is extended to exclude the maximum queuing delay and variation.

It should be noted that, Type in Fig. 10 is 16 bits, and is used for indicating the type of excluding the maximum queuing delay and variation of the node. Length is 16 bits, and is used for indicating the length of the sub-TLV. The Maximum Queuing Delay is 32 bits, and is used for indicating the maximum queuing delay of the node. The Maximum Queuing Delay Variation is 32 bits, and is used for indicating the maximum queuing delay variation of the node.

Fig. 11 is a third schematic diagram of the sub-TLV of the OSPF FAD TLV according to an embodiment of the present disclosure, which provides a schematic diagram of an OSPF Exclude Maximum POF Delay sub-TLV. As shown in Fig. 11, the OSPF Exclude Maximum POF Delay sub-TLV belonging to the sub-TLV of the OSPF FAD TLV is extended to exclude the maximum packet ordering function (POF)delay variation.

It should be noted that, Type in Fig. 11 is 16 bits, and is used for indicating the type of excluding the maximum POF delay variation. Length is 16 bits, and is used for indicating the length of the sub-TLV. The Maximum Queuing Delay is 32 bits, and is used for indicating the maximum queuing delay of the node. The Maximum POF Delay is 32 bits, and is used for indicating the maximum POF delay. The Maximum POF Delay Variation is 32 bits, and is used for indicating the maximum POF delay variation.

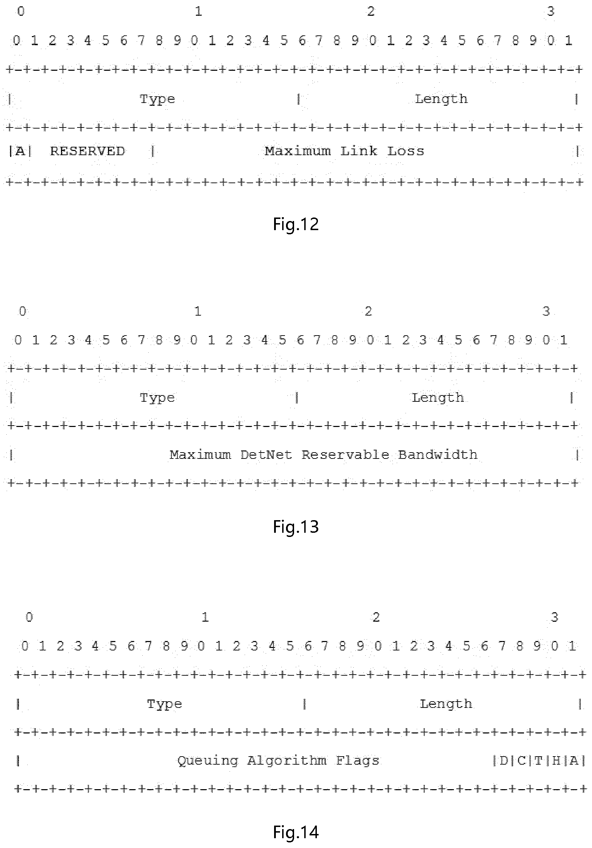

Fig. 12 is a fourth schematic diagram of the sub-TLV of the OSPF FAD TLV according to an embodiment of the present disclosure, which provides a schematic diagram of an OSPF Exclude Maximum Out-of-order Number sub-TLV. As shown in Fig. 12, the OSPF Exclude Maximum Out-of-order Number sub-TLV belonging to the sub-TLV of the OSPF FAD TLV is extended to exclude the maximum out of order number.

It should be noted that, Type in Fig. 12 is 16 bits, and is used for indicating the type of excluding the maximum out of order number. Length is 16 bits, and is used for indicating the length of the sub-TLV. The Maximum Queuing Delay is 32 bits, and is used for indicating the maximum queuing delay of the node. A is 1 bit, and when being set to be 1, A indicates that a change in the link packet loss number exceeds a threshold value. The Maximum Link Loss is 32 bits, and is used for indicating the maximum link loss.

Fig. 13 is a fifth schematic diagram of the sub-TLV of the OSPF FAD TLV according to an embodiment of the present disclosure, which provides a schematic diagram of an OSPF Exclude Maximum DetNet reservable bandwidth sub-TLV. As shown in Fig. 13, the OSPF Exclude Maximum DetNet reservable bandwidth sub-TLV belonging to the sub-TLV of the OSPF FAD TLV is extended to exclude the maximum DetNet reservable bandwidth.

It should be noted that, Type in Fig. 13 is 16 bits, and is used for indicating the type of excluding the maximum DetNet reservable bandwidth. Length is 16 bits, and is used for indicating the length of the sub-TLV. The Maximum DetNet reservable bandwidth is 32 bits, and is used for indicating the maximum DetNet reservable bandwidth.

Fig. 14 is a sixth schematic diagram of the sub-TLV of the OSPF FAD TLV according to an embodiment of the present disclosure, which provides a schematic diagram of an OSPF Include-Any Queuing Algorithm sub-TLV. As shown in Fig. 14, the OSPF Include-Any Queuing Algorithm sub-TLV belonging to the sub-TLV of the OSPF FAD TLV is extended to include a deterministic network queuing scheduling algorithm.

It should be noted that, Type in Fig. 14 is 16 bits, and is used for indicating the type of including any queuing algorithm. Length is 16 bits, and is used for indicating the length of the sub-TLV. The Queuing Algorithm Flags is 32 bits, and is used for indicating the queuing algorithms, wherein D represents a Dealine scheduling algorithm, C represents a CBS scheduling algorithm, T represents a TAS scheduling algorithm, Q represents a CQF scheduling algorithm, and A represents an ATS scheduling algorithm.

It should be noted that, the type of the sub-TLV of the OSPF FAD TLV 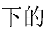 sub-TLV may be modified by means of modifying the type indicated by Type in Fig. 14, wherein the type indicated by Type may be a type instructing to include any queuing algorithm, and may also be a type instructing to exclude the queuing algorithms, but it is not limited thereto.

In one embodiment, the type of an OSPF Include-All Queuing Algorithm sub-TLV is provided. As shown in Fig. 14, in the present embodiment, the OSPF Include-All Queuing Algorithm sub-TLV belonging to the sub-TLV of the OSPF FAD TLV is extended to determine all deterministic network queuing scheduling algorithms. Type is 16 bits, and is used for indicating the type of including any queuing algorithm. Length is 16 bits, and is used for indicating the length of the sub-TLV. The Queuing Algorithm Flags is 32 bits, and is used for indicating the queuing algorithms, wherein D represents a Dealine scheduling algorithm, C represents a CBS scheduling algorithm, T represents a TAS scheduling algorithm, Q represents a CQF scheduling algorithm, and A represents an ATS scheduling algorithm.

In one embodiment, the type of an OSPF Exclude Queuing Algorithm sub-TLV is provided. As shown in Fig. 14, in the present embodiment, the OSPF Exclude Queuing Algorithm sub-TLV belonging to the sub-TLV of the OSPF FAD TLV is extended to exclude some deterministic network queuing scheduling algorithms. Type is 16 bits, and is used for indicating the type of excluding the queuing algorithms. Length is 16 bits, and is used for indicating the length of the sub-TLV. The Queuing Algorithm Flags is 32 bits, and is used for indicating the queuing algorithms, wherein D represents a Dealine scheduling algorithm, C represents a CBS scheduling algorithm, T represents a TAS scheduling algorithm, Q represents a CQF scheduling algorithm, and A represents an ATS scheduling algorithm.

Optionally, in one embodiment, the BGP-LS protocol may be extended to implement an Flex-algo-based deterministic delay variation index constraint and an Flex-algo-based topology constraint condition.

Further, a BGP-LS Exclude Maximum Processing Delay sub-TLV may be extended to exclude the maximum node processing delay and variation, and the data format of the extended BGP-LS Exclude Maximum Processing Delay sub-TLV may refer to Fig. 9.

Further, a BGP-LS Exclude Maximum Queuing Delay sub-TLV may be extended to exclude the maximum queuing delay and variation, and the data format of the extended BGP-LS Exclude Maximum Queuing Delay sub-TLV may refer to Fig. 10.

Further, a BGP-LS Exclude Maximum POF Delay sub-TLV may be extended to exclude the packet ordering function (POF) delay and variation, and the data format of the extended BGP-LS Exclude Maximum POF Delay sub-TLV may refer to Fig. 11.

Further, a BGP-LS Exclude Maximum Link Loss sub-TLV may be extended to exclude the maximum link loss, and the data format of the extended BGP-LS Exclude Maximum Link Loss sub-TLV may refer to Fig. 12.

Further, a BGP-LS Exclude Maximum DetNet reservable bandwidth sub-TLV may be extended to exclude the maximum DetNet reservable bandwidth, and the data format of the extended BGP-LS Exclude Maximum DetNet reservable bandwidth sub-TLV may refer to Fig. 13.

Further, in one embodiment, a BGP-LS Include-Any Queuing Algorithm sub-TLV may be extended to include a deterministic network queuing scheduling algorithm, and the data format of the extended BGP-LS Include-Any Queuing Algorithm sub-TLV may refer to Fig. 14.

Further, a BGP-LS Exclude-All Queuing Algorithm sub-TLV may be extended to exclude all deterministic network queuing scheduling algorithms, and the data format of the extended BGP-LS Exclude-All Queuing Algorithm sub-TLV may refer to Fig. 14.

Further, a BGP-LS Exclude Queuing Algorithm sub-TLV may be extended to exclude some deterministic network queuing scheduling algorithms, and the data format of the extended BGP-LS Exclude Queuing Algorithm sub-TLV may refer to Fig. 14.

### Embodiment 2

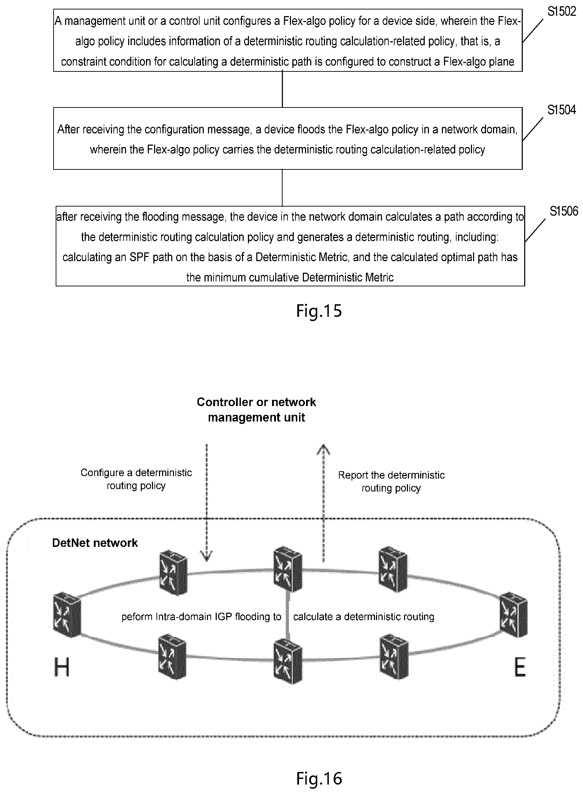

The present embodiment provides an Flex-algo-based deterministic path calculating and reporting method, wherein an extended IGP includes an IS-IS protocol, an OSPF protocol implements deterministic path calculation, and an extended BGP-LS protocol implements deterministic path reporting, thereby realizing deterministic path calculation and deterministic resource reservation. Fig. 15 is a schematic diagram of a Flex-algo deterministic routing calculation processing flow according to an embodiment of the present disclosure. As shown in Fig. 15, the specific steps are as follows:
Step 1502, a management unit or a control unit configures a Flex-algo policy for a device side, wherein the Flex-algo policy includes information of a deterministic routing calculation-related policy, that is, a constraint condition for calculating a deterministic path is configured to construct a Flex-algo plane;
Step 1504, after receiving the configuration message, a device floods the Flex-algo policy in a network domain, wherein the Flex-algo policy carries the deterministic routing calculation-related policy; and
Step 1506, after receiving the flooding message, the device in the network domain calculates a path according to the deterministic routing calculation policy and generates a deterministic routing, including: calculating an SPF path on the basis of a Deterministic Metric, and the calculated optimal path has the minimum cumulative Deterministic Metric.

Next, a deterministic network based on IGP path calculation is described in combination with Fig. 16 and the following embodiments.

### Embodiment 3

The present embodiment provides a technical solution of calculating a deterministic routing by using an OSPF protocol in an IGP domain. Fig. 16 is a schematic diagram of a deterministic network based on IGP path calculation according to an embodiment of the present disclosure. As shown in Fig. 16, the present disclosure provides an IGP-based Flex-algo deterministic routing calculation method, wherein a controller or a network management unit issues, to a node H of a DetNet network, a Flex-algo policy carrying deterministic path calculation, and the node H calculates a routing according to a deterministic calculation policy in the Flex-algo policy by means of the OSPF protocol in the IGP domain. The specific process is as follows:
Step 1, the controller or the network management unit (which is equivalent to the management unit or the control unit mentioned above) issues the Flex-algo policy to the DetNet node H, wherein the Flex-algo policy includes a policy of calculating a deterministic routing by using the OSPF protocol, the policy carries OSPFFAD information, the Metric-Type Deterministic Delay Metric in FAD carries a constraint condition of path computation, and the constraint condition carries: for example, an OSPF Exclude Maximum Processing Delay sub-TLV, which limits the maximum processing delay of the node within 10 us and limits the maximum processing delay within 2 us; an OSPF Exclude Maximum Queuing Delay sub-TLV, which limits the maximum queuing delay of the node within 10 us and limits the maximum queuing delay variation within 2 us; and an OSPF Include-Any Maximum Queuing Algorithm sub-TLV, in which C is set to be 1, and which limits a queuing scheduling algorithm of the node to use CBS.
Step 2, after receiving the Flex-algo policy, the node H floods to other nodes in the network via the OSPF protocol. Assuming that the FAD annunciated by the node H has the highest priority, all nodes in the whole network will consistently calculate a deterministic SPF path based on Deterministic Delay Metric of the corresponding Flex-algo plane according to the FAD.

### Embodiment 4

The present embodiment provides a technical solution of calculating a deterministic routing by using an IS-IS protocol in an IGP domain. As shown in Fig. 16, based on a DetNet network structure diagram of IGP path calculation, the present disclosure provides an IGP-based Flex-algo deterministic routing calculation method, wherein a controller or a network management unit issues, to a node H of a DetNet network, a Flex-algo policy carrying deterministic path calculation, and the node H calculates a routing according to a deterministic calculation policy in the Flex-algo policy by means of the IS-IS protocol in the IGP domain. The specific process is as follows:
Step 1, the controller or the network management unit issues the Flex-algo policy to the DetNet node H, wherein the Flex-algo policy includes a policy of calculating a deterministic routing by using the IS-IS protocol, the policy carries an IS-IS FAD sub-TLV, the Metric-Type Deterministic Delay Metric carries a constraint condition of path computation at the same time, and the constraint condition carries: for example, an IS-IS Exclude Maximum Processing Delay sub-TLV, which limits the maximum processing delay of the node within 5 us and limits the maximum processing delay within 1 us; an IS-IS Exclude Maximum Queuing Delay sub-TLV, which limits the maximum queuing delay of the node within 5 us and limits the maximum queuing delay variation within 1 us; and an IS-IS Include-Any Maximum Queuing Algorithm sub-TLV, in which Q is set to be 1, and which limits a queuing scheduling algorithm of the node to use CQF.
Step 2, after receiving the Flex-algo policy, the DetNet node runs the IS-IS protocol to calculate a deterministic routing, and performs flooding in the domain.

### Embodiment 5

The present embodiment provides a technical solution of a reporting an Flex-algo deterministic routing policy by using a BGP-LS. As shown in Fig. 16,based on a DetNet network structure diagram of IGP path calculation, the present disclosure provides an IGP-based Flex-algo deterministic routing calculation method, wherein a controller or a network management unit issues, to a node H of a DetNet network, a Flex-algo policy carrying deterministic path calculation, and the node H calculates a routing according to a deterministic calculation policy in the Flex-algo policy by means of an IS-IS protocol in an IGP domain. The node H may report the Flex-algo deterministic routing policy by means of the BGP-LS, and the specific process is as follows:
Step 1, the controller or the network management unit issues the Flex-algo policy to the DetNet node H, wherein the Flex-algo policy includes a policy of calculating a deterministic routing in the domain by using an IGP.
Step 2,after receiving the Flex-algo policy, the DetNet node H floods the Flex-algo policy in the domain, and all nodes in an Flex-algo plane calculate the deterministic routing in a distributed manner.
Step 3, the DetNet node H reports an Flex-algo deterministic routing policy to the controller by means of a BGP-LS protocol, wherein the Flex-algo deterministic routing policy carries: a BGP-LS Exclude Maximum Processing Delay sub-TLV, which is used for excluding the maximum node processing delay and variation; and carries a BGP-LS Exclude Maximum Queuing Delay sub-TLV, which is used for excluding the maximum queuing delay and variation, etc.

By means of the above embodiments, the present disclosure provides an Flex-alog-based deterministic path calculating and reporting method, the extended IGP includes an IS-IS protocol and an OSPF protocol, so as to implement deterministic path computation, and the extended BGP-LS protocol implements deterministic path reporting, thereby implementing deterministic path calculation and deterministic routing flooding and reporting, where the extension involves:
1. A deterministic delay calculation type is added for a path calculation type regarding Flex-algo in the extended IGP.
2.in view of constraint conditions regarding the path calculation of Flex-algo in the extended IGP, excluding the maximum node message processing delay and variation, excluding the maximum queuing delay and variation, excluding the maximum ordering delay and variation, excluding the maximum link loss, excluding the maximum DetNet reservable bandwidth, excluding queuing scheduling algorithms, including any queuing scheduling algorithm, including all queuing scheduling algorithms and the like are newly added.
3. The policy reporting of path calculation of Flex-algo in the extended BGP-LS protocol includes: excluding the maximum queuing delay and variation, excluding the maximum ordering delay and variation, excluding the maximum out of order number, excluding the maximum DetNet reservable bandwidth, excluding queuing scheduling algorithms, including any queuing scheduling algorithm, including all queuing scheduling algorithms, and the like.

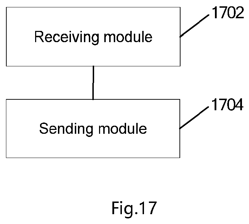

Fig. 17 is a structural block diagram of a deterministic routing calculation apparatus according to an embodiment of the present disclosure. As shown in Fig. 17, the deterministic routing calculation apparatus is applied to a device-side node, and includes:
a receiving module 1702, configured to receive an Flex-algo policy configuration message sent by a management unit or a control unit, wherein the Flex-algo policy configuration message includes information of a deterministic routing calculation-related policy; and
a sending module 1704, configured to send, in a network domain, a flooding message to all devices in the network domain, so as to instruct all devices to calculate a path according to the deterministic routing calculation-related policy and to generate a deterministic routing, wherein the flooding message carries the Flex-algo policy configuration message.

By means of the above solutions, the Flex-algo policy configuration message sent by the management unit or the control unit is received, wherein the Flex-algo policy configuration message includes the information of the deterministic routing calculation-related policy; and the flooding message is sent, in the network domain, to all devices in the network domain, so as to instruct all devices to calculate the path according to the deterministic routing calculation-related policy and to generate the deterministic routing, wherein the flooding message carries the Flex-algo policy configuration message. Therefore, the problem in the related arts that deterministic delay calculation and reporting cannot be implemented on the basis of the Flex-algo and by using an IGP/BGP-LS protocol in the Standards is solved, deterministic resources and paths are provided for a deterministic network, and deterministic service requirements of a low delay variation and a low packet loss rate are met.

Further, in the case that the protocol used for sending the flooding message in the network domain is an open shortest path first (OSPF) protocol, the information of the deterministic routing calculation-related policy includes: a Metric-Type added in an OSPF FAD TLV, and a Deterministic Metric added in the OSPF FAD TLV; and in the case that the protocol used for sending the flooding message in the network domain is an intermediate system to intermediate system (IS-IS) protocol, the information of the deterministic routing calculation-related policy includes: a Metric-Type added in an IS-IS FAD sub-TLV, and a Deterministic Metric added in the IS-IS FAD sub-TLV.

Further, in the case that the protocol used for sending the flooding message in the network domain is the open shortest path first (OSPF) protocol, the information of the deterministic routing calculation-related policy includes: a topology constraint condition added in a sub-TLV of an OSPF FAD sub-TLV for calculating a deterministic path; and in the case that the protocol used for sending the flooding message in the network domain is the intermediate system to intermediate system (IS-IS) protocol, the information of the deterministic routing calculation-related policy includes: a topology constraint condition added in a sub-TLV of the IS-IS FAD sub-TLV for calculating a deterministic path.

Further, the information of the deterministic routing calculation-related policy includes an Exclude Maximum Processing Delay sub-TLV added in the sub-TLV of the IS-IS FAD sub-TLV, wherein the Exclude Maximum Processing Delay sub-TLV is used for excluding the maximum node processing delay and variation; the information of the deterministic routing calculation-related policy includes an Exclude Maximum Queuing Delay sub-TLV added in the sub-TLV of the IS-IS FAD sub-TLV, wherein the Exclude Maximum Queuing Delay sub-TLV is used for excluding the maximum queuing delay and variation; the information of the deterministic routing calculation-related policy includes an Exclude Maximum POF Delay sub-TLV added in the sub-TLV of the IS-IS FAD sub-TLV, wherein the Exclude Maximum POF Delay sub-TLV is used for excluding the maximum packet ordering function delay and variation; the information of the deterministic routing calculation-related policy includes an Exclude Maximum Link Loss sub-TLV added in the sub-TLV of the IS-IS FAD sub-TLV, wherein the Exclude Maximum Link Loss sub-TLV is used for excluding the maximum link loss; the information of the deterministic routing calculation-related policy includes an Exclude Maximum DetNet reservable bandwidth sub-TLV added in the sub-TLV of the IS-IS FAD sub-TLV, wherein the Exclude Maximum DetNet reservable bandwidth sub-TLV is used for excluding the maximum DetNet reservable bandwidth; the information of the deterministic routing calculation-related policy includes an Include-Any Queuing Algorithm sub-TLV added in the sub-TLV of the IS-IS FAD sub-TLV, wherein the Include-Any Queuing Algorithm sub-TLV is used for indicating a deterministic network queuing scheduling algorithm; the information of the deterministic routing calculation-related policy includes an Include-All Queuing Algorithm sub-TLV added in the sub-TLV of the IS-IS FAD sub-TLV, wherein the Include-All Queuing Algorithm sub-TLV is used for indicating all deterministic network queuing scheduling algorithms; and the information of the deterministic routing calculation-related policy includes an Exclude Queuing Algorithm sub-TLV added in the sub-TLV of the IS-IS FAD sub-TLV, wherein the Exclude Queuing Algorithm sub-TLV is used for excluding a target deterministic network queuing scheduling algorithm.

Further, the information of the deterministic routing calculation-related policy includes an Exclude Maximum Processing Delay sub-TLV added in the sub-TLV of the OSPF FAD sub-TLV, wherein the Exclude Maximum Processing Delay sub-TLV is used for excluding the maximum node processing delay and variation; the information of the deterministic routing calculation-related policy includes an Exclude Maximum Queuing Delay sub-TLV added in the sub-TLV of the OSPF FAD sub-TLV, wherein the Exclude Maximum Queuing Delay sub-TLV is used for excluding the maximum queuing delay and variation; the information of the deterministic routing calculation-related policy includes an Exclude Maximum POF Delay sub-TLV added in the sub-TLV of the OSPF FAD sub-TLV, wherein the Exclude Maximum POF Delay sub-TLV is used for excluding the maximum packet ordering function delay and variation; the information of the deterministic routing calculation-related policy includes an Exclude Maximum Out-of-order Number sub-TLV added in the sub-TLV of the OSPF FAD sub-TLV, wherein the Exclude Maximum Out-of-order Number sub-TLV is used for excluding the maximum out-of-order number; the information of the deterministic routing calculation-related policy includes an Exclude Maximum DetNet reservable bandwidth sub-TLV added in the sub-TLV of the OSPF FAD sub-TLV, wherein the Exclude Maximum DetNet reservable bandwidth sub-TLV is used for excluding the maximum DetNet reservable bandwidth; the information of the deterministic routing calculation-related policy includes an Include-Any Queuing Algorithm sub-TLV added in the sub-TLV of the OSPF FAD sub-TLV, wherein the Include-Any Queuing Algorithm sub-TLV is used for indicating a deterministic network queuing scheduling algorithm; the information of the deterministic routing calculation-related policy includes an Include-All Queuing Algorithm sub-TLV added in the sub-TLV of the OSPF FAD sub-TLV, wherein the Include-All Queuing Algorithm sub-TLV is used for indicating all deterministic network queuing scheduling algorithms; and the information of the deterministic routing calculation-related policy includes an Exclude Queuing Algorithm sub-TLV added in the sub-TLV of the OSPF FAD sub-TLV, wherein the Exclude Queuing Algorithm sub-TLV is used for excluding a target deterministic network queuing scheduling algorithm.

Further, the deterministic routing calculation apparatus further includes a reporting module, configured to instruct any device in the network domain to report, to a controller, a deterministic routing that carries the information of the deterministic routing calculation-related policy.

Further, the deterministic routing calculation apparatus further includes an extension module, configured to implement a deterministic delay variation index constraint by means of an extended BGP-LS protocol, and determine a topology constraint condition.

Further, an Exclude Maximum Processing Delay sub-TLV is added into the BGP-LS protocol, so as to exclude the maximum node processing delay and variation; an Exclude Maximum Queuing Delay sub-TLV is added into the BGP-LS protocol, so as to exclude the maximum queuing delay and variation; an Exclude Maximum POF Delay sub-TLV is added into the BGP-LS protocol, so as exclude the maximum packet ordering function delay and variation; an Exclude Maximum Link Loss sub-TLV is added into the BGP-LS protocol, so as to exclude the maximum link loss; an Exclude Maximum DetNet reservable bandwidth sub-TLV is added into the BGP-LS protocol, so as exclude the maximum DetNet reservable bandwidth; an Include-Any Queuing Algorithm sub-TLV is added into the BGP-LS protocol, so as to indicate a deterministic network queuing scheduling algorithm; an Include-All Queuing Algorithm sub-TLV is added into the BGP-LS protocol, so as to indicate all deterministic network queuing scheduling algorithms; and an Exclude Queuing Algorithm sub-TLV is added into the BGP-LS protocol, so as to exclude a target deterministic network queuing scheduling algorithm.

In an exemplary embodiment, the computer-readable storage medium may include, but is not limited to, a variety of media capable of storing computer programs, such as a USB disk, a read-only memory (ROM for short), a random access memory (RAM for short), a mobile hard disk, a magnetic disk, or an optical disk.

For specific examples in the present embodiment, reference may be made to the examples described in the foregoing embodiments and exemplary implementations, and thus details are not described herein again in the present embodiment.

Optionally, in the present embodiment, the computer programs stored in the computer-readable storage medium may execute the following steps:
S1, receiving an Flex-algo policy configuration message sent by a management unit or a control unit, wherein the Flex-algo policy configuration message includes information of a deterministic routing calculation-related policy; and
S2, sending, in a network domain, a flooding message to all devices in the network domain, so as to instruct all devices to calculate a path according to the deterministic routing calculation-related policy and to generate a deterministic routing, wherein the flooding message carries the Flex-algo policy configuration message.

An embodiment of the present disclosure further provides an electronic device, including a memory and a processor, wherein a computer program is stored in the memory, and the processor is configured to run the computer program, so as to execute the steps in any one of the above method embodiments.

Optionally, in the present embodiment, the processor may be configured to execute the following steps by means of the computer program:
S1, receiving an Flex-algo policy configuration message sent by a management unit or a control unit, wherein the Flex-algo policy configuration message includes information of a deterministic routing calculation-related policy; and
S2, sending, in a network domain, a flooding message to all devices in the network domain, so as to instruct all devices to calculate a path according to the deterministic routing calculation-related policy and to generate a deterministic routing, wherein the flooding message carries the Flex-algo policy configuration message.

In an exemplary embodiment, the electronic device may further include a transmission device and an input/output device, wherein the transmission device is connected with the processor, and the input/output device is connected with the processor.

For specific examples in the present embodiment, reference may be made to the examples described in the foregoing embodiments and exemplary implementations, and thus details are not described herein again in the present embodiment.

Obviously, it should be understood by those skilled in the art that, the above modules or steps of the present disclosure may be implemented by a universal computing apparatus, may be concentrated on a single computing apparatus or distributed on a network composed of a plurality of computing apparatuses, and may also be implemented by program codes executable by the computing apparatus, therefore the modules or steps may be stored in a storage apparatus to be executed by the computing apparatus, and in some cases, the shown or described steps may be executed in a sequence different from that herein, or the steps are respectively made into various integrated circuit modules, or a plurality of modules or steps therein may be made into a single integrated circuit module for implementation. As such, the present disclosure is not limited to any particular hardware and software combination.

## Claims

1. A deterministic routing calculation method, applied to a device-side node, and comprising:
receiving (S202) a Flexible algorithm, Flex-algo, policy configuration message sent by a management unit or a control unit, wherein the Flex-algo policy configuration message comprises information of a deterministic routing calculation-related policy; and
sending (S204), in a network domain, a flooding message to all devices in the network domain, so as to instruct all devices to calculate a path according to the deterministic routing calculation-related policy and to generate a deterministic routing, wherein the flooding message carries the Flex-algo policy configuration message.

2. The deterministic routing calculation method according to claim 1, wherein the method further comprises:
in a case that the protocol used for sending the flooding message in the network domain is an Open Shortest Path First, OSPF, protocol, the information of the deterministic routing calculation-related policy comprises: a Metric-Type added in an OSPF FAD TLV, and a Deterministic Metric added in the OSPF FAD TLV; and
in a case that the protocol used for sending the flooding message in the network domain is an Intermediate System to Intermediate System, IS-IS, protocol, the information of the deterministic routing calculation-related policy comprises: a Metric-Type added in an IS-IS FAD sub-TLV, and a Deterministic Metric added in the IS-IS FAD sub-TLV.

3. The deterministic routing calculation method according to claim 2, wherein the method further comprises:
in the case that the protocol used for sending the flooding message in the network domain is the OSPF protocol, the information of the deterministic routing calculation-related policy comprises: a topology constraint condition added in a sub-TLV of an OSPF FAD sub-TLV for calculating a deterministic path; and
in the case that the protocol used for sending the flooding message in the network domain is the IS-IS protocol, the information of the deterministic routing calculation-related policy comprises: a topology constraint condition added in a sub-TLV of the IS-IS FAD sub-TLV for calculating a deterministic path.

4. The deterministic routing calculation method according to claim 3, wherein the method further comprises:
the information of the deterministic routing calculation-related policy comprises an exclude maximum processing delay sub-TLV added in the sub-TLV of the IS-IS FAD sub-TLV, wherein the exclude maximum processing delay sub-TLV is used for excluding the maximum node processing delay and variation;
the information of the deterministic routing calculation-related policy comprises an exclude maximum queuing delay sub-TLV added in the sub-TLV of the IS-IS FAD sub-TLV, wherein the exclude maximum queuing delay sub-TLV is used for excluding the maximum queuing delay and variation;
the information of the deterministic routing calculation-related policy comprises an exclude maximum POF delay sub-TLV added in the sub-TLV of the IS-IS FAD sub-TLV, wherein the exclude maximum POF delay sub-TLV is used for excluding the maximum packet ordering function delay and variation;
the information of the deterministic routing calculation-related policy comprises an exclude maximum link loss sub-TLV added in the sub-TLV of the IS-IS FAD sub-TLV, wherein the exclude maximum link loss sub-TLV is used for excluding the maximum link loss;
the information of the deterministic routing calculation-related policy comprises an exclude maximum DetNet reservable bandwidth sub-TLV added in the sub-TLV of the IS-IS FAD sub-TLV, wherein the exclude maximum DetNet reservable bandwidth sub-TLV is used for excluding the maximum DetNet reservable bandwidth;
the information of the deterministic routing calculation-related policy comprises an Include-Any Queuing Algorithm sub-TLV added in the sub-TLV of the IS-IS FAD sub-TLV, wherein the Include-Any Queuing Algorithm sub-TLV is used for indicating a deterministic network queuing scheduling algorithm;
the information of the deterministic routing calculation-related policy comprises an Include-All Queuing Algorithm sub-TLV added in the sub-TLV of the IS-IS FAD sub-TLV, wherein the Include-All Queuing Algorithm sub-TLV is used for indicating all deterministic network queuing scheduling algorithms; and
the information of the deterministic routing calculation-related policy comprises an Exclude Queuing Algorithm sub-TLV added in the sub-TLV of the IS-IS FAD sub-TLV, wherein the Exclude Queuing Algorithm sub-TLV is used for excluding a target deterministic network queuing scheduling algorithm.

5. The deterministic routing calculation method according to claim 3, wherein the method further comprises:
the information of the deterministic routing calculation-related policy comprises an Exclude Maximum Processing Delay sub-TLV added in the sub-TLV of the OSPF FAD sub-TLV, wherein the Exclude Maximum Processing Delay sub-TLV is used for excluding the maximum node processing delay and variation;
the information of the deterministic routing calculation-related policy comprises an Exclude Maximum Queuing Delay sub-TLV added in the sub-TLV of the OSPF FAD sub-TLV, wherein the Exclude Maximum Queuing Delay sub-TLV is used for excluding the maximum queuing delay and variation;
the information of the deterministic routing calculation-related policy comprises an Exclude Maximum POF Delay sub-TLV added in the sub-TLV of the OSPF FAD sub-TLV, wherein the Exclude Maximum POF Delay sub-TLV is used for excluding the maximum packet ordering function delay and variation;
the information of the deterministic routing calculation-related policy comprises an Exclude Maximum Out-of-order Number sub-TLV added in the sub-TLV of the OSPF FAD sub-TLV, wherein the Exclude Maximum Out-of-order Number sub-TLV is used for excluding the maximum out-of-order number;
the information of the deterministic routing calculation-related policy comprises an exclude maximum DetNet reservable bandwidth sub-TLV added in the sub-TLV of the OSPF FAD sub-TLV, wherein the exclude maximum DetNet reservable bandwidth sub-TLV is used for excluding the maximum DetNet reservable bandwidth;
the information of the deterministic routing calculation-related policy comprises an Include-Any Queuing Algorithm sub-TLV added in the sub-TLV of the OSPF FAD sub-TLV, wherein the Include-Any Queuing Algorithm sub-TLV is used for indicating a deterministic network queuing scheduling algorithm;
the information of the deterministic routing calculation-related policy comprises an Include-All Queuing Algorithm sub-TLV added in the sub-TLV of the OSPF FAD sub-TLV, wherein the Include-All Queuing Algorithm sub-TLV is used for indicating all deterministic network queuing scheduling algorithms; and
the information of the deterministic routing calculation-related policy comprises an Exclude Queuing Algorithm sub-TLV added in the sub-TLV of the OSPF FAD sub-TLV, wherein the Exclude Queuing Algorithm sub-TLV is used for excluding a target deterministic network queuing scheduling algorithm.

6. The deterministic routing calculation method according to claim 1, wherein the method further comprises:
instructing any device in the network domain to report, to a controller, a deterministic routing that carries the information of the deterministic routing calculation-related policy.

7. The deterministic routing calculation method according to claim 6, wherein the method further comprises:
implementing a deterministic delay variation index constraint by means of an extended BGP-LS protocol, and determining a topology constraint condition.

8. The deterministic routing calculation method according to claim 7, wherein the method further comprises:
adding an Exclude Maximum Processing Delay sub-TLV into the BGP-LS protocol, so as to exclude the maximum node processing delay and variation;
adding an Exclude Maximum Queuing Delay sub-TLV into the BGP-LS protocol, so as to exclude the maximum queuing delay and variation;
adding an Exclude Maximum POF Delay sub-TLV into the BGP-LS protocol, so as exclude the maximum packet ordering function delay and variation;
adding an Exclude Maximum Link Loss sub-TLV into the BGP-LS protocol, so as to exclude the maximum link loss;
adding an exclude maximum DetNet reservable bandwidth sub-TLV into the BGP-LS protocol, so as exclude the maximum DetNet reservable bandwidth;
adding an Include-Any Queuing Algorithm sub-TLV into the BGP-LS protocol, so as to indicate a deterministic network queuing scheduling algorithm;
adding an Include-All Queuing Algorithm sub-TLV into the BGP-LS protocol, so as to indicate all deterministic network queuing scheduling algorithms; and
adding an Exclude Queuing Algorithm sub-TLV into the BGP-LS protocol, so as to exclude a target deterministic network queuing scheduling algorithm.

9. A deterministic routing calculation apparatus, applied to a device-side node, and comprising:
a receiving module (1702), configured to receive a Flexible algorithm, Flex-algo, policy configuration message sent by a management unit or a control unit, wherein the Flex-algo policy configuration message comprises information of a deterministic routing calculation-related policy; and
a sending module (1704), configured to send, in a network domain, a flooding message to all devices in the network domain, so as to instruct all devices to calculate a path according to the deterministic routing calculation-related policy and to generate a deterministic routing, wherein the flooding message carries the Flex-algo policy configuration message.

10. A computer-readable storage medium, in which a computer program is stored, wherein the computer program is configured to cause, when executed by a processor, the processor to implement the method as claimed in any one of claims 1-8.

11. An electronic device, comprising a memory and a processor, wherein a computer program is stored in the memory, and the processor is configured to execute the computer program to implement the method as claimed in any one of claims 1-8.

## Patentansprüche

1. Deterministisches Routingberechnungsverfahren, das auf einen vorrichtungsseitigen Knoten angewendet wird, umfassend:
Empfangen (S202) einer Richtlinie-Konfigurationsnachricht eines Flexible-Algorithmus, Flex-algo, die von einer Verwaltungseinheit oder einer Steuereinheit gesendet wird, wobei die Richtlinie-Konfigurationsnachricht des Flex-algo Informationen über eine Richtlinie, die mit der deterministischen Routingberechnung in Beziehung steht; umfasst und
Senden (S204) einer Flooding-Nachricht in einer Netzwerkdomäne an alle Vorrichtungen in der Netzwerkdomäne, um alle Vorrichtungen anzuweisen, einen Pfad nach der Richtlinie, die mit der deterministischen Routingberechnung in Beziehung steht, zu berechnen und ein deterministisches Routing zu erzeugen, wobei die Flooding-Nachricht die Richtlinie-Konfigurationsnachricht des Flex-algo trägt.

2. Deterministisches Routingberechnungsverfahren nach Anspruch 1, wobei das Verfahren ferner umfasst:
in einem Fall, dass das Protokoll, das zum Senden der Flooding-Nachricht in der Netzwerkdomäne verwendet wird ein Open Shortest Path First, OSPF, Protokoll ist, umfassen die Informationen der Richtlinie, die mit der deterministischen Routingberechnung in Beziehung steht: einen in einem OSPF FAD-TLV hinzugefügten Metriktyp und eine in dem OSPF FAD-TLV hinzugefügte deterministische Metrik; und
in einem Fall, dass das Protokoll, das zum Senden der Flooding-Nachricht in der Netzwerkdomäne verwendet wird, ein Intermediate System to Intermediate System, IS-IS, Protokoll ist, umfassen die Informationen der Richtlinie, die mit der deterministischen Routingberechnung in Beziehung steht: einen in einem IS-IS FAD-sub-TLV hinzugefügten Metriktyp und eine in dem IS-IS FAD-sub-TLV hinzugefügte deterministische Metrik.

3. Deterministisches Routingberechnungsverfahren nach Anspruch 2, wobei das Verfahren ferner umfasst:
in einem Fall, dass das Protokoll, das zum Senden der Flooding-Nachricht in der Netzwerkdomäne verwendet wird, das OSPF-Protokoll ist, umfassen die Informationen der Richtlinie, die mit der deterministischen Routingberechnung in Beziehung steht: eine in einem sub-TLV eines OSPF FAD-sub-TLV hinzugefügte Topologiebegrenzungsbedingung zum Berechnen eines deterministischen Pfads; und
in einem Fall, dass das Protokoll, das zum Senden der Flooding-Nachricht in der Netzwerkdomäne verwendet wird, das IS-IS-Protokoll ist, umfassen die Informationen der Richtlinie, die mit der deterministischen Routingberechnung in Beziehung steht: eine in einem sub-TLV des IS-IS FAD-sub-TLV hinzugefügte Topologiebegrenzungsbedingung zum Berechnen eines deterministischen Pfads.

4. Deterministische Routingberechnungsverfahren nach Anspruch 3, wobei das Verfahren ferner umfasst:
die Informationen der Richtlinie, die mit der deterministischen Routingberechnung in Beziehung steht, umfassen ein in dem sub-TLV des IS-IS FAD-sub-TLV hinzugefügtes sub-TLV zum Ausschluss der maximalen Verarbeitungsverzögerung, wobei das sub-TLV zum Ausschluss der maximalen Verarbeitungsverzögerung zum Ausschluss der maximalen Verarbeitungsverzögerung und Änderung verwendet wird;
die Informationen der Richtlinie, die mit der deterministischen Routingberechnung in Beziehung steht, umfassen ein in einem sub-TLV des IS-IS FAD-sub-TLV hinzugefügtes sub-TLV zum Ausschluss der maximalen Warteschlangenverzögerung, wobei das sub-TLV zum Ausschluss der maximalen Warteschlangenverzögerung zum Ausschluss der maximalen Warteschlangenverzögerung und Änderung verwendet wird;
die Informationen der Richtlinie, die mit der deterministischen Routingberechnung in Beziehung steht, umfassen ein in dem sub-TLV des IS-IS FAD-sub-TLV hinzugefügtes sub-TLV zum Ausschluss der maximalen POF Verzögerung, wobei das sub-TLV zum Ausschluss maximaler POF Verzögerung zum Ausschluss der maximalen Paketreihenfolgefunktionsverzögerung und Änderung verwendet wird;
die Informationen der Richtlinie, die mit der deterministischen Routingberechnung in Beziehung steht, umfassen ein in dem sub-TLV des IS-IS FAD-sub-TLV hinzugefügtes sub-TLV zum Ausschluss des maximalen Verbindungsverlusts, wobei das sub TLV zum Ausschluss der maximalen Verbindungsverlust zum Ausschluss des maximalen Verbindungsverlusts verwendet wird;
die Informationen der Richrlinie, die mit der deterministischen Routingberechnung in Beziehung steht, umfassen ein in dem sub-TLV des IS-IS FAD-sub-TLV hinzugefügtes sub-TLV zum Ausschluss der maximal reservierbaren DetNet-Bandbreite, wobei das sub-TLV zum Ausschluss der maximal reservierbaren DetNet Bandbreite zum Ausschluss der maximal reservierbaren DetNet-Bandbreite verwendet wird;
die Informationen der Richtlinie, die mit der deterministischen Routingberechnung in Beziehung steht, umfassen ein in dem sub-TLV des IS-IS FAD-sub-TLV hinzugefügtes sub-TLV zur Einbeziehung eines beliebigen Warteschlangenalgorithmus, wobei das sub-TLV zur Einbeziehung eines beliebigen Warteschlangenalgorithmus zum Angeben eines deterministischen Netzwerk-Warteschlangenplanungsalgorithmus verwendet wird;
die Informationen der Richtlinie, die mit der deterministischen Routingberechnung in Beziehung steht, umfassen ein in dem sub-TLV des IS-IS FAD-sub-TLV hinzugefügtes sub-TLV zur Einbeziehung aller Warteschlangenalgorithmen, wobei das sub-TLV zur Einbeziehung aller Warteschlagenalgorithmen zum Angeben aller deterministischen Netzwerk-Warteschlangenplanungsalgorithmen verwendet wird; und
die Informationen der Richtlinie, die mit der deterministischen Routingberechnung in Beziehung steht, umfassen ein in dem sub-TLV des IS-IS FAD-sub-TLV hinzugefügtes sub-TLV zum Ausschluss eines Warteschlangenalgorithmus, wobei das sub-TLV zum Ausschluss eines deterministischen Zielnetzwerk-Warteschlangenplanungsalgorithmus zum Ausschluss eines Zielnetzwerk-Warteschlangenplanungsalgorithmus verwendet wird.

5. Deterministische Routingberechnungsverfahren nach Anspruch 3, wobei das Verfahren ferner umfasst:
die Informationen der Richtlinie, die mit der deterministischen Routingberechnung in Beziehung steht, umfassen ein in dem sub-TLV des OSPF FAD-sub-TLV hinzugefügtes sub-TLV zum Ausschluss der maximalen Verarbeitungsverzögerung, wobei das sub-TLV zum Ausschluss der maximalen Verarbeitungsverzögerung zum Ausschluss der maximalen Knotenverarbeitungsverzögerung und Änderung verwendet wird;
die Informationen der Richtlinie, die mit der deterministischen Routingberechnung in Beziehung steht, umfassen ein in dem sub-TLV des OSPF FAD-sub-TLV hinzugefügtes sub-TLV zum Ausschluss der maximalen Warteschlangenverzögerung, wobei das sub-TLV zum Ausschluss der maximalen Warteschlangenverzögerung zum Ausschluss der maximalen Warteschlangenverzögerung und Änderung verwendet wird;
die Informationen der Richtlinie, die mit der deterministischen Routingberechnung in Beziehung steht, umfassen ein in dem sub-TLV des OSPF FAD-sub-TLV hinzugefügtes sub-TLV zum Ausschluss der maximalen POF-Verzögerung, wobei das sub-TLV zum Ausschluss der maximalen POF-Verzögerung zum Ausschluss der maximalen Paketreihenfolgefunktionsverzögerung und Änderung verwendet wird;
die Informationen der Richtlinie, die mit der deterministischen Routingberechnung in Beziehung steht, umfassen ein in dem sub-TLV des OSPF FAD-sub-TLV hinzugefügtes sub-TLV zum Ausschluss der maximalen Out-of-Order Zahl, wobei das sub-TLV zum Ausschluss der maximalen Out-of-Order Zahl zum Ausschluss der maximalen Out-of-Order Zahl verwendet wird;
die Informationen der Richtlinie, die mit der deterministischen Routingberechnung in Beziehung steht, umfassen ein in dem sub-TLV des OSPF FAD-sub-TLV hinzugefügtes sub-TLV zum Ausschluss der maximal reservierbaren DetNet-Bandbreite, wobei das sub-TLV zum Ausschluss der maximal reservierbaren DetNet Bandbreite zum Ausschluss der maximal reservierbaren DetNet-Bandbreite verwendet wird;
die Informationen der Richtlinie, die mit der deterministischen Routingberechnung in Beziehung steht, umfassen ein in dem sub-TLV des OSPF FAD-sub-TLV hinzugefügtes sub-TLV zur Einbeziehung eines beliebigen Warteschlangenalgorithmus, wobei das sub-TLV zur Einbeziehung eines beliebigen Warteschlangenalgorithmus zum Angeben eines deterministischen Netzwerk-Warteschlangenplanungsalgorithmus verwendet wird;
die Informationen der Richtlinie, die mit der deterministischen Routingberechnung in Beziehung steht, umfassen ein in dem sub-TLV des OSPF FAD-sub-TLV hinzugefügtes Sub-TLV zur Einbeziehung aller Warteschlangenalgorithmen, wobei das sub-TLV zur Einbeziehung aller Warteschlangenalgorithmen zum Angeben aller deterministischen Netzwerk-Warteschlangenplanungsalgorithmen verwendet wird; und
die Informationen der Richtlinie, die mit der deterministischen Routingberechnung in Beziehung steht, umfassen ein in dem sub-TLV des OSPF FAD-sub-TLV hinzugefügtes sub-TLV zum Ausschluss eines Warteschlangenalgorithmus, wobei das sub-TLV zum Ausschluss eines Warteschlangenalgorithmus zum Ausschluss eines Zielnetzwerk-Warteschlangenplanungsalgorithmus verwendet wird.

6. Deterministisches Routingberechnungsverfahren nach Anspruch 1, wobei das Verfahren ferner umfasst:
Anweisen jeder Vorrichtung in der Netzwerkdomäne, einem Controller ein deterministisches Routing zu melden, das die Informationen der Richtlinie enthält, die mit der deterministischen Routingberechnung in Beziehung steht.

7. Deterministisches Routingberechnungsverfahren nach Anspruch 6, wobei das Verfahren ferner umfasst:
Implementieren einer deterministischen Verzögerungsänderungsindexbegrenzung mittels eines erweiterten BGP-LS-Protokolls und Bestimmen einer Topologiebegrenzungsbedingung.

8. Deterministisches Routingberechnungsverfahren nach Anspruch 7, wobei das Verfahren ferner umfasst:
Hinzufügen eines sub-TLV zum Ausschluss der maximalen Verarbeitungsverzögerung in das BGP-LS-Protokoll, um die maximale Knotenverarbeitungsverzögerung und Änderung auszuschließen;
Hinzufügen eines sub-TLV zum Ausschluss der maximalen Warteschlangenverzögerung in das BGP-LS-Protokoll, um die maximale Warteschlangenverzögerung und Änderung auszuschließen;
Hinzufügen eines sub-TLV zum Ausschluss der maximalen POF-Verzögerung in das BGP-LS-Protokoll, um die maximale Paketreihenfolgefunktionsverzögerung und Änderung auszuschließen;
Hinzufügen eines sub-TLV zum Ausschluss des maximalen Verbindungsverlusts in das BGP-LS-Protokoll, um den maximalen Verbindungsverlust auszuschließen;
Hinzufügen eines sub-TLV zum Ausschluss der maximal reservierbaren DetNet-Bandbreite in das BGP-LS-Protokoll, um die maximal reservierbare DetNet-Bandbreite auszuschließen;
Hinzufügen eines sub-TLV zur Einbeziehung eines beliebigen Warteschlangenalgorithmus in das BGP-LS-Protokoll, um einen deterministischen Netzwerk-Warteschlangenplanungsalgorithmus anzugeben;
Hinzufügen eines sub-TLV zur Einbeziehung aller Warteschlangenalgorithmen in das BGP-LS-Protokoll, um alle deterministischen Netzwerk-Warteschlangenplanungsalgorithmen anzugeben; und
Hinzufügen eines sub-TLV zum Ausschluss eines Warteschlangenalgorithmus in das BGP-LS-Protokoll, um einen deterministischen Zielnetzwerk-Warteschlangenplanungsalgorithmus auszuschließen.

9. Vorrichtung zur deterministischen Routingberechnung, die auf einen vorrichtungsseitigen Knoten angewendet wird, umfassend:
ein Empfangsmodul (1702), das dazu konfiguriert ist, eine Richtlinie-Konfigurationsnachricht eines Flexible Algorithmus, Flex-algo zu empfangen, die von einer Verwaltungseinheit oder einer Steuereinheit gesendet wird, wobei die Flex-algo Richtlinie-Konfigurationsnachricht Informationen über eine Richtlinie, die mit der deterministischen Routingberechnung in Beziehung steht, umfasst; und
ein Sendemodul (1704), das dazu konfiguriert ist. eine Flooding-Nachricht in einer Netzwerkdomäne an alle Geräte in der Netzwerkdomäne zu senden, um alle Geräte anzuweisen, einen Pfad nach der Richtlinie, die mit der deterministischen Routingberechnung in Beziehung steht, zu berechnen und ein deterministisches Routing zu erzeugen, wobei die Flooding-Nachricht die Flex-algo-Richtlinie-Konfigurationsnachricht trägt.

10. Computerlesbares Speichermedium, in dem ein Computerprogramm gespeichert wird, wobei das Computerprogramm, wenn es von einem Prozessor ausgeführt wird, dazu konfiguriert ist, den Prozessor zu veranlassen, das Verfahren nach einem der Ansprüche 1 bis 8 auszuführen.

11. Elektronische Vorrichtung umfassend einen Speicher und einen Prozessor, wobei ein Computerprogramm in dem Speicher gespeichert wird und der Prozessor dazu konfiguriert ist, das Computerprogramm auszuführen, um das Verfahren nach einem der Ansprüche 1 bis 8 zu implementieren.

## Revendications

1. Procédé de calcul de routage déterministe, appliqué à un nœud côté dispositif, et comprenant :
la réception (S202) d'un message de configuration de politique d'algorithme flexible, Flex-algo, envoyé par une unité de gestion ou une unité de contrôle, ledit message de configuration de politique Flex-algo comprenant des informations relatives à une politique associée au calcul de routage déterministe ; et
l'envoi (S204), dans un domaine de réseau, d'un message de diffusion à tous les dispositifs du domaine de réseau, de manière à instruire tous les dispositifs de calculer un chemin selon la politique associée au calcul de routage déterministe et de générer un routage déterministe, le message de diffusion transportant le message de configuration de politique Flex-algo.

2. Le procédé de calcul de routage déterministe selon la revendication 1, dans lequel le procédé comprend en outre :
dans le cas où le protocole utilisé pour envoyer le message de diffusion dans le domaine de réseau est le protocole Open Shortest Path First, OSPF, les informations relatives à la politique associée au calcul de routage déterministe comprennent : un type de métrique ajouté dans un TLV FAD OSPF, et une métrique déterministe ajoutée dans le TLV FAD OSPF ; et
dans le cas où le protocole utilisé pour envoyer le message de diffusion dans le domaine de réseau est un protocole Intermediate System to Intermediate System, IS-IS, les informations relatives à la politique associée au calcul de routage déterministe comprennent : un type de métrique ajouté dans un sous-TLV FAD IS-IS, et une métrique déterministe ajoutée dans le sous-TLV FAD IS-IS.

3. Le procédé de calcul de routage déterministe selon la revendication 2, dans lequel le procédé comprend en outre :
dans le cas où le protocole utilisé pour envoyer le message de diffusion dans le domaine de réseau est le protocole OSPF, les informations relatives à la politique associée au calcul de routage déterministe comprennent : une condition de contrainte topologique ajoutée dans un sous-TLV d'un sous-TLV FAD OSPF pour le calcul d'un chemin déterministe ; et
dans le cas où le protocole utilisé pour envoyer le message de diffusion dans le domaine de réseau est le protocole IS-IS, les informations relatives à la politique associée au calcul de routage déterministe comprennent : une condition de contrainte topologique ajoutée dans un sous-TLV du sous-TLV FAD IS-IS pour le calcul d'un chemin déterministe.

4. Le procédé de calcul de routage déterministe selon la revendication 3, dans lequel le procédé comprend en outre :
les informations relatives à la politique associée au calcul de routage déterministe comprennent un sous-TLV d'exclusion du délai maximal de traitement ajouté dans le sous-TLV du sous-TLV FAD IS-IS, ledit sous-TLV d'exclusion du délai maximal de traitement étant utilisé pour exclure le délai maximal de traitement de nœud et sa variation ;
les informations relatives à la politique associée au calcul de routage déterministe comprennent un sous-TLV d'exclusion du délai maximal de mise en file d'attente ajouté dans le sous-TLV du sous-TLV FAD IS-IS, ledit sous-TLV d'exclusion du délai maximal de mise en file d'attente étant utilisé pour exclure le délai maximal de mise en file d'attente et sa variation ;
les informations relatives à la politique associée au calcul de routage déterministe comprennent un sous-TLV d'exclusion du délai maximal de la fonction de réordonnancement de paquets (POF) ajouté dans le sous-TLV du sous-TLV FAD IS-IS, ledit sous-TLV d'exclusion du délai maximal POF étant utilisé pour exclure le délai maximal de la fonction de réordonnancement de paquets et sa variation ;
les informations relatives à la politique associée au calcul de routage déterministe comprennent un sous-TLV d'exclusion de la perte de liaison maximale ajouté dans le sous-TLV du sous-TLV FAD IS-IS, ledit sous-TLV d'exclusion de la perte de liaison maximale étant utilisé pour exclure la perte de liaison maximale ;
les informations relatives à la politique associée au calcul de routage déterministe comprennent un sous-TLV d'exclusion de la bande passante maximale réservable DetNet ajouté dans le sous-TLV du sous-TLV FAD IS-IS, ledit sous-TLV d'exclusion de la bande passante maximale réservable DetNet étant utilisé pour exclure la bande passante maximale réservable DetNet ;
les informations relatives à la politique associée au calcul de routage déterministe comprennent un sous-TLV d'inclusion de n'importe quel algorithme de mise en file d'attente ajouté dans le sous-TLV du sous-TLV FAD IS-IS, ledit sous-TLV d'inclusion de n'importe quel algorithme de mise en file d'attente étant utilisé pour indiquer un algorithme de planification de la mise en file d'attente du réseau déterministe ;
les informations relatives à la politique associée au calcul de routage déterministe comprennent un sous-TLV d'inclusion de tous les algorithmes de mise en file d'attente ajouté dans le sous-TLV du sous-TLV FAD IS-IS, ledit sous-TLV d'inclusion de tous les algorithmes de mise en file d'attente étant utilisé pour indiquer tous les algorithmes de planification de la mise en file d'attente du réseau déterministe ; et
les informations relatives à la politique associée au calcul de routage déterministe comprennent un sous-TLV d'exclusion d'un algorithme de mise en file d'attente ajouté dans le sous-TLV du sous-TLV FAD IS-IS, ledit sous-TLV d'exclusion d'un algorithme de mise en file d'attente étant utilisé pour exclure un algorithme cible de planification de la mise en file d'attente du réseau déterministe.

5. Le procédé de calcul de routage déterministe selon la revendication 3, dans lequel le procédé comprend en outre :
les informations relatives à la politique associée au calcul de routage déterministe comprennent un sous-TLV d'exclusion du délai maximal de traitement ajouté dans le sous-TLV du sous-TLV FAD OSPF, ledit sous-TLV d'exclusion du délai maximal de traitement étant utilisé pour exclure le délai maximal de traitement de nœud et sa variation ;
les informations relatives à la politique associée au calcul de routage déterministe comprennent un sous-TLV d'exclusion du délai maximal de mise en file d'attente ajouté dans le sous-TLV du sous-TLV FAD OSPF, ledit sous-TLV d'exclusion du délai maximal de mise en file d'attente étant utilisé pour exclure le délai maximal de mise en file d'attente et sa variation ;
les informations relatives à la politique associée au calcul de routage déterministe comprennent un sous-TLV d'exclusion du délai maximal de la fonction de réordonnancement de paquets (POF) ajouté dans le sous-TLV du sous-TLV FAD OSPF, ledit sous-TLV d'exclusion du délai maximal POF étant utilisé pour exclure le délai maximal de la fonction de réordonnancement de paquets et sa variation ;
les informations relatives à la politique associée au calcul de routage déterministe comprennent un sous-TLV d'exclusion du nombre maximal de paquets désordonnés ajouté dans le sous-TLV du sous-TLV FAD OSPF, ledit sous-TLV d'exclusion du nombre maximal de paquets désordonnés étant utilisé pour exclure le nombre maximal de paquets désordonnés ;
les informations relatives à la politique associée au calcul de routage déterministe comprennent un sous-TLV d'exclusion de la bande passante maximale réservable DetNet ajouté dans le sous-TLV du sous-TLV FAD OSPF, ledit sous-TLV d'exclusion de la bande passante maximale réservable DetNet étant utilisé pour exclure la bande passante maximale réservable DetNet ;
les informations relatives à la politique associée au calcul de routage déterministe comprennent un sous-TLV d'inclusion de n'importe quel algorithme de mise en file d'attente ajouté dans le sous-TLV du sous-TLV FAD OSPF, ledit sous-TLV d'inclusion de n'importe quel algorithme de mise en file d'attente étant utilisé pour indiquer un algorithme de planification de la mise en file d'attente du réseau déterministe ;
les informations relatives à la politique associée au calcul de routage déterministe comprennent un sous-TLV d'inclusion de tous les algorithmes de mise en file d'attente ajouté dans le sous-TLV du sous-TLV FAD OSPF, ledit sous-TLV d'inclusion de tous les algorithmes de mise en file d'attente étant utilisé pour indiquer tous les algorithmes de planification de la mise en file d'attente du réseau déterministe ; et
les informations relatives à la politique associée au calcul de routage déterministe comprennent un sous-TLV d'exclusion d'un algorithme de mise en file d'attente ajouté dans le sous-TLV du sous-TLV FAD OSPF, ledit sous-TLV d'exclusion d'un algorithme de mise en file d'attente étant utilisé pour exclure un algorithme cible de planification de la mise en file d'attente du réseau déterministe

6. Le procédé de calcul de routage déterministe selon la revendication 1, dans lequel le procédé comprend en outre :
instruire tout dispositif dans le domaine de réseau de rapporter, à un contrôleur, un routage déterministe portant les informations relatives à la politique associée au calcul de routage déterministe.

7. Le procédé de calcul de routage déterministe selon la revendication 6, dans lequel le procédé comprend en outre :
mettre en œuvre une contrainte d'indice de variation de délai déterministe au moyen d'un protocole BGP-LS étendu, et déterminer une condition de contrainte topologique.

8. Le procédé de calcul de routage déterministe selon la revendication 7, dans lequel le procédé comprend en outre :
ajouter un sous-TLV d'exclusion du délai maximal de traitement dans le protocole BGP-LS, de manière à exclure le délai maximal de traitement de nœud et sa variation ;
ajouter un sous-TLV d'exclusion du délai maximal de mise en file d'attente dans le protocole BGP-LS, de manière à exclure le délai maximal de mise en file d'attente et sa variation ;
ajouter un sous-TLV d'exclusion du délai maximal de la fonction de réordonnancement de paquets (POF) dans le protocole BGP-LS, de manière à exclure le délai maximal de la fonction de réordonnancement de paquets et sa variation ;
ajouter un sous-TLV d'exclusion de la perte de liaison maximale dans le protocole BGP-LS, de manière à exclure la perte de liaison maximale ;
ajouter un sous-TLV d'exclusion de la bande passante maximale réservable DetNet dans le protocole BGP-LS, de manière à exclure la bande passante maximale réservable DetNet,
ajouter un sous-TLV d'inclusion de n'importe quel algorithme de mise en file d'attente dans le protocole BGP-LS, de manière à indiquer un algorithme de planification de la mise en file d'attente du réseau déterministe ;
ajouter un sous-TLV d'inclusion de tous les algorithmes de mise en file d'attente dans le protocole BGP-LS, de manière à indiquer tous les algorithmes de planification de la mise en file d'attente du réseau déterministe ; et
ajouter un sous-TLV d'exclusion d'un algorithme de mise en file d'attente dans le protocole BGP-LS, de manière à exclure un algorithme cible de planification de la mise en file d'attente du réseau déterministe.

9. Dispositif de calcul de routage déterministe, appliqué à un nœud côté dispositif, et comprenant :
un module de réception (1702), configuré pour recevoir un message de configuration de politique d'algorithme flexible, Flex-algo, envoyé par une unité de gestion ou une unité de contrôle, ledit message de configuration de politique Flex-algo comprenant des informations relatives à une politique associée au calcul de routage déterministe ; et
un module d'envoi (1704), configuré pour envoyer, dans un domaine de réseau, un message de diffusion à tous les dispositifs du domaine de réseau, de manière à instruire tous les dispositifs de calculer un chemin selon la politique associée au calcul de routage déterministe et de générer un routage déterministe, le message de diffusion transportant le message de configuration de politique Flex-algo.

10. Support de stockage lisible par ordinateur, dans lequel est stocké un programme informatique, ledit programme informatique étant configuré pour amener, lorsqu'il est exécuté par un processeur, le processeur à mettre en œuvre le procédé selon l'une quelconque des revendications 1 à 8.

11. Dispositif électronique, comprenant une mémoire et un processeur, un programme informatique étant stocké dans la mémoire, et le processeur étant configuré pour exécuter le programme informatique afin de mettre en œuvre le procédé selon l'une quelconque des revendications 1 à 8.
